(19) Europäisches Patentamt / European Patent Office / Office européen des brevets

(11) **EP 2 950 047 B1**

(12) **EUROPEAN PATENT SPECIFICATION**

(45) Date of publication and mention
of the grant of the patent:
**03.04.2019 Bulletin 2019/14**

(51) Int Cl.:
*G01C 21/34* *(2006.01)*        *G01C 21/26* *(2006.01)*
*G08G 1/0968* *(2006.01)*       *G01C 21/20* *(2006.01)*
*G01C 21/36* *(2006.01)*        *G01S 19/39* *(2010.01)*
*G08G 1/005* *(2006.01)*

(21) Application number: **13876861.9**

(22) Date of filing: **25.11.2013**

(86) International application number:
**PCT/CN2013/087759**

(87) International publication number:
**WO 2014/134933 (12.09.2014 Gazette 2014/37)**

(54) **PEDESTRIAN NAVIGATION PROCESSING METHOD, TERMINAL DEVICE AND SYSTEM**

FUSSGÄNGERNAVIGATIONSVERARBEITUNGSVERFAHREN, ENDGERÄTEVORRICHTUNG UND SYSTEM

PROCÉDÉ DE TRAITEMENT, DISPOSITIF TERMINAL ET SYSTÈME POUR NAVIGATION PIÉTONNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2013 CN 201310067786**

(43) Date of publication of application:
**02.12.2015 Bulletin 2015/49**

(60) Divisional application:
**19158420.0**

(73) Proprietor: **Huawei Technologies Co., Ltd.**
**Longgang District**
**Shenzhen, Guangdong 518129 (CN)**

(72) Inventors:
• **LI, Li**
**Shenzhen**
**Guangdong 518129 (CN)**
• **DING, Qiang**
**Shenzhen**
**Guangdong 518129 (CN)**
• **LU, Jia**
**Shenzhen**
**Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(56) References cited:
CN-A- 102 538 814        CN-A- 102 568 241
JP-A- H0 652 493         JP-A- 2004 045 156
JP-A- 2008 197 703       JP-A- 2011 232 042
US-A1- 2009 216 431      US-A1- 2013 013 197
US-B1- 6 278 943         US-B2- 8 306 743

## Description

### TECHNICAL FIELD

Embodiments of the present invention relate to a method, system and terminal device for processing pedestrian navigation.

### BACKGROUND

With popularity and development of a terminal device, such as a smartphone or a tablet computer, a convenient pedestrian navigation service provided on the terminal device for a user has become a primary requirement of a user.

In the prior art, the pedestrian navigation service mainly provides navigation prompts for the user in two aspects: a turning prompt and a route-replanning prompt. For the turning prompt, when the user arrives in an intersection range, the terminal device needs to prompt the user with a turning direction in advance, for example, prompt the user by means of a voice prompt, a text prompt, and a direction arrow icon. For the route-replanning prompt, after a position of the user deviates from a preset navigation planning route by a specific distance, the terminal device needs to prompt the user whether to replan a navigation route, for example, a dialog box is displayed and prompts the user with "You have deviated from the navigation planning route. Do you need to replan a navigation route?".

However, the following problem frequently occurs in the prior art: for the turning prompt, the user needs to turn at a second intersection, but the terminal device prompts the user to turn in an intersection range of a first intersection or the terminal device prompts the user to turn after the user has passed through the second intersection; or for the route-replanning prompt, either the terminal device frequently prompts that the user has deviated from the navigation planning route, or, after the user deviates from a preset navigation planning route for a long distance, the terminal device prompts that the user has deviated from the navigation planning route. Therefore, how to perform accurate navigation for a pedestrian becomes an urgent technical problem.

US 6,278,943 B1 describes a vehicle system for travel guidance of intersections.

JP 2004 045156 A describes a navigation program for navigating a pedestrian to a destination.

US 2013/0013197 A1 describes a system provided for GPS navigation utilizing variable route corridors.

### SUMMARY

The present invention provides a method according to claim 1 and a device according to claim 9. In addition, optional features of the present invention are set out in the dependent claims.

According to a first aspect, an embodiment of the present invention provides a pedestrian navigation processing method, including: determining, by a terminal device according to a current position of a user and navigation planning route information, a road section on which the user is currently located, where the navigation planning route information includes route information of all road sections between a departure place and a destination; obtaining, by the terminal device , a road width of the road section according to a positioning result obtained when the user walks on the road section and route information of the road section; determining, by the terminal device according to the road width, a navigation prompt time corresponding to the road section, where the navigation prompt time is a turning prompt time; and performing, by the terminal device , navigation prompting for the user according to the navigation prompt time, where the determining, by the terminal device, according to the road width, a navigation prompt time corresponding to the road section comprises: adjusting, by the terminal device, a navigation prompt range according to the road width, where the navigation prompt range is a region range using a connection point of the road section and a next road section as a center; and determining, by the terminal device, a navigation prompt time according to the adjusted navigation prompt range, where the navigation prompt time is a moment when the user walks into the navigation prompt range.

With reference to the first aspect, in a first possible implementation manner, the obtaining, by the terminal device , a road width of the road section according to a positioning result obtained when the user walks on the road section and route information of the road section includes: sending, by the terminal device , to a network side device, the positioning result obtained when the user walks on the road section and the route information of the road section, to request the network side device to obtain the road width of the road section according to the positioning result and the route information of the road section; and receiving, by the terminal device , the road width of the road section sent by the network side device.

With reference to the first aspect and the first possible implementation manner of the first aspect, in a second possible implementation manner, the obtaining, by the terminal device , a road width of the road section according to a positioning result obtained when the user walks on the road section and route information of the road section includes: determining, by the terminal device, a current position of the user according to one positioning result obtained when the user walks on the road section; determining, by the terminal device according to the route information of the road section, a center line of the road section on which the user is currently located; determining, by the terminal device , a perpendicular distance between the current position of the user and the center line of the road section on which the user is currently located; and using, by the terminal device , the perpendicular distance as a half road width of the road section on which the user is currently located.

With reference to the second possible implementation manner, in a third possible implementation manner, the determining, by the terminal device according to the road width, a navigation prompt time corresponding to the road section includes: adjusting, by the terminal device according to the road width and a confidence level of the road width, the navigation prompt range corresponding to the road section, where the confidence level of the road width is positioning precision of the one positioning result; and determining, by the terminal device , the navigation prompt time according to the adjusted navigation prompt range.

With reference to the first aspect and the first possible implementation manner of the first aspect, in a fourth possible implementation manner, the obtaining, by the terminal device , a road width of the road section according to a positioning result obtained when the user walks on the road section and route information of the road section includes: determining, by the terminal device , at least two positions of the user according to at least two positioning results obtained when the user walks on the road section; determining, by the terminal device according to the route information of the road section, a center line of the road section on which the user is currently located; determining, by the terminal device , a perpendicular distance between each position of the at least two positions and the center line of the road section on which the user is currently located; performing, by the terminal device , weighted average on the determined perpendicular distances according to positioning precision of the at least two positioning results; and using, by the terminal device , a perpendicular distance obtained by performing weighted average as a half road width of the road section on which the user is currently located.

With reference to the fourth possible implementation manner, in a fifth possible implementation manner, the determining, by the terminal device according to the road width, a navigation prompt time corresponding to the road section includes: adjusting, according to the road width and a confidence level of the road width, the navigation prompt range corresponding to the road section, where the confidence level of the road width is determined according to a quantity of positioning times of the at least two positioning results, a variance of the perpendicular distances, and mean positioning precision; and determining, by the terminal device, the navigation prompt time according to the adjusted navigation prompt range.

With reference to the third possible implementation manner and the fifth possible implementation manner, in a sixth possible implementation manner, the adjusting, by the terminal device according to the road width, a navigation prompt range corresponding to the road section includes: if the road width is greater than a preset width, expanding, by the terminal device , the navigation prompt range; otherwise, narrowing the navigation prompt range or using a default navigation prompt range; and the adjusting, by the terminal device according to the road width and a confidence level of the road width, a navigation prompt range corresponding to the road section includes: if the road width is greater than a preset width and the confidence level is greater than a preset confidence level, expanding, by the terminal device , the navigation prompt range; otherwise, narrowing the navigation prompt range or using a default navigation prompt range.

With reference to any one of the foregoing possible implementation manners, in a seventh possible implementation manner, the determining, by the terminal device according to a current position of a user and navigation planning route information, a road section on which the user is currently located includes: matching, by the terminal device , latitude and longitude of the current position of the user with latitude and longitude of a starting point and latitude and longitude of an ending point of all road sections in the navigation planning route information, to determine the road section on which the user is currently located.

According to a second aspect, an embodiment of the present invention provides a terminal device, including: a road section determining module, configured to determine, according to a current position of a user and navigation planning route information, a road section on which the user is currently located, where the navigation planning route information includes route information of all road sections between a departure place and a destination; a road section width determining module, configured to obtain a road width of the road section according to a positioning result obtained when the user walks on the road section and route information of the road section, and send the road width of the road section to a navigation prompt time determining module; the navigation prompt time determining module, configured to receive the road width of the road section sent by the road section width determining module, determine, according to the road width, a navigation prompt time corresponding to the road section, and send the navigation prompt time to a navigation prompt module, where the navigation prompt time is a turning prompt time; and the navigation prompt module, configured to receive the navigation prompt time sent by the navigation prompt time determining module, and perform navigation prompting for the user according to the navigation prompt time, wherein the navigation prompt time determining module is configured to: adjust, according to the road width, a navigation prompt range corresponding to the road section, wherein the navigation prompt range is a region range using a connection point of the road section and a next road section as a center; and determine the navigation prompt time according to the adjusted navigation prompt range, wherein the navigation prompt time is a moment when the user walks into the navigation prompt range.

With reference to the second aspect, in a first possible implementation manner, the road section width determining module is specifically configured to: send, to a network side device, the positioning result obtained when the user walks on the road section and the route information of the road section, to request the network side device to obtain the road width of the road section according to the positioning result and the route information of the road section; and receive the road width of the road section sent by the network side device.

With reference to the second aspect, in a second possible implementation manner, the road section width determining module is specifically configured to: determine a current position of the user according to one positioning result obtained when the user walks on the road section; determine, according to the route information of the road section, a center line of the road section on which the user is currently located; determine a perpendicular distance between the current position of the user and the center line of the road section on which the user is currently located; and use the perpendicular distance as a half road width of the road section on which the user is currently located.

With reference to the second possible implementation manner, in a third possible implementation manner, the navigation prompt time determining module is specifically configured to: adjust, according to the road width and a confidence level of the road width, a navigation prompt range corresponding to the road section, where the confidence level of the road width is positioning precision of the one positioning result; and determine the navigation prompt time according to the adjusted navigation prompt range.

With reference to the second aspect, in a fourth possible implementation manner, the road section width determining module is specifically configured to: determine at least two positions of the user according to at least two positioning results obtained when the user walks on the road section; determine, according to the route information of the road section, a center line of the road section on which the user is currently located; determine a perpendicular distance between each position of the at least two positions and the center line of the road section on which the user is currently located; perform weighted average on the determined perpendicular distances according to positioning precision of the at least two positioning results; and use a perpendicular distance obtained by performing weighted average as a half road width of the road section on which the user is currently located.

With reference to the fourth possible implementation manner, in a fifth possible implementation manner, the navigation prompt time determining module is specifically configured to: adjust, according to the road width and a confidence level of the road width, a navigation prompt range corresponding to the road section, where the confidence level of the road width is determined according to a quantity of positioning times of the at least two positioning results, a variance of the perpendicular distances, and mean positioning precision; and determine the navigation prompt time according to the adjusted navigation prompt range.

With reference to the third possible implementation manner and the fifth possible implementation manner, in a sixth possible implementation manner, the navigation prompt time determining module is specifically configured to, if the road width is greater than a preset width, expand the navigation prompt range; otherwise, narrow the navigation prompt range or use a default navigation prompt range; or the navigation prompt time determining module is specifically configured to, if the road width is greater than a preset width and the confidence level is greater than a preset confidence level, expand the navigation prompt range; otherwise, narrow the navigation prompt range or use a default navigation prompt range.

With reference to any one of the foregoing possible implementation manners, in a seventh possible implementation manner, the road section determining module is specifically configured to match latitude and longitude of the current position of the user with latitude and longitude of a starting point and latitude and longitude of an ending point of all road sections in the navigation planning route information, to determine the road section on which the user is currently located.

It can be seen that the embodiments of the present invention provide a pedestrian navigation processing method and a terminal device, which may determine, according to a current position of a user and navigation planning route information, a road section on which the user is currently located; then obtain a road width of the road section according to a positioning result obtained when the user walks on the road section and route information of the road section; and further determine a navigation prompt time according to the road width, and perform navigation prompting for the user according to the navigation prompt time. Therefore, on each road section of a navigation planning route, a navigation prompt time can be dynamically adjusted according to a road width of the road section, so as to resolve a problem, in the prior art, of inaccurate navigation caused by a road width difference between the road sections, thereby effectively improving guiding effect of navigation.

## BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.

FIG. 1 is a flowchart of a first embodiment of a pedestrian navigation prompt method according to an embodiment of the present invention;

FIG. 2 is a flowchart of a second embodiment of a pedestrian navigation processing method according to an embodiment of the present invention;

FIG. 3 is a schematic diagram of an adjustment process specific to a turning prompt in the second method embodiment shown in FIG. 2;

FIG. 4 is a schematic diagram of another adjustment process specific to the turning prompt in the second method embodiment shown in FIG. 2;

FIG. 5 is a schematic diagram of an adjustment process specific to a route-replanning prompt in the second method embodiment shown in FIG. 2;

FIG. 6 is a schematic structural diagram of a first embodiment of a terminal device according to an embodiment of the present invention;

FIG. 7 is a schematic structural diagram of a second embodiment of a terminal device according to an embodiment of the present invention;

FIG. 8 is a schematic structural diagram of a third embodiment of a terminal device according to an embodiment of the present invention; and

FIG. 9 is a schematic structural diagram of an embodiment of a pedestrian navigation processing system according to an embodiment of the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention.

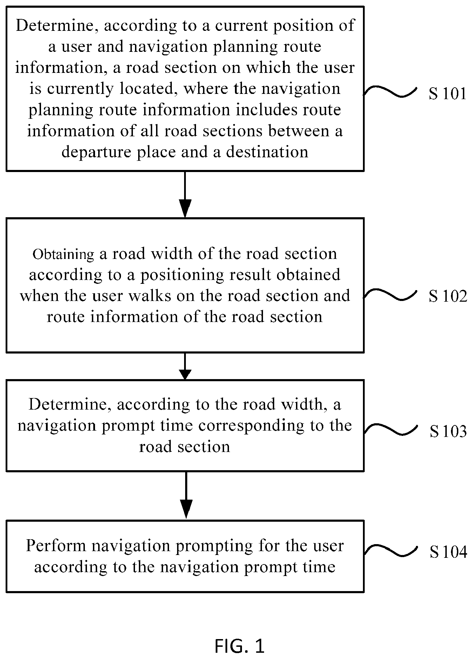

FIG. 1 is a flowchart of a first embodiment of a pedestrian navigation prompt method according to an embodiment of the present invention. As shown in FIG. 1, the method in this embodiment may include:

S101. Determine, according to a current position of a user and navigation planning route information, a road section on which the user is currently located, where the navigation planning route information includes route information of all road sections between a departure place and a destination.

S102. Obtain a road width of the road section according to a positioning result obtained when the user walks on the road section and route information of the road section.

S103. Determine, according to the road width, a navigation prompt time corresponding to the road section.

S104. Perform navigation prompting for the user according to the navigation prompt time.

In an existing pedestrian navigation service, a terminal device uses a preset constant prompt threshold to determine a prompt time of performing navigation prompting for a user.

Specifically, by using a turning prompt, a turning prompt range is preset on the terminal device, where the turning prompt range is a region range using an intersection as a center. For example, the region range may be a circular region range or may be a rectangular region range. Correspondingly, a turning prompt time is a moment when the user walks into the turning prompt range of a turning intersection. After the user walks into the turning prompt range, the terminal device performs turning prompt for the user. However, only one size of the turning prompt range is set in the prior art; for example, a circular region range that uses the intersection as a center and whose radius is R is set, that is, all turning intersections have same set turning prompt ranges. Therefore, for a relatively narrow road section, the turning prompt range may be too large, the turning prompt range may cover a turning intersection of the road section and a non-turning intersection of a previous road section, and the terminal device prompts the user to turn at the non-turning intersection of the previous road section, which causes that the user incorrectly turns. For a relatively wide road section, the turning prompt range may be too small, and the terminal device may prompt the user to turn only when the user is close to the turning intersection or even after the user passes through the turning intersection, causing untimely prompting.

By using a route-replanning prompt as an example, an adjacent road section region may also preset on the terminal device, where the adjacent road section region is generally a region range using a center line of the road section as a center. For example, the region range may be a rectangular region range or may be an oval or circular region range. Correspondingly, a route-replanning prompt time is a moment when the user walks out of the adjacent road section region. After the user walks out of the adjacent road section region, the terminal device performs route-replanning prompting for the user, or prompts the user in a specific period of time after the user walks out of the adjacent road section region. However, only one size of the adjacent road section region is set in the prior art; for example, a rectangular region range that uses the center line of the road section as a center and whose area is S is set, that is, all road sections have same set adjacent road section regions, where the center line of the road section is a line between a starting point and an ending point of the road section. Therefore, for a relatively narrow road section, the adjacent road section region may be too large, and the terminal device prompts the user to replan a route after the user deviates from a planning road section by a relatively long distance, causing untimely prompting. For a relatively wide road section, the adjacent road section region may be too small, and the terminal device prompts the user to replan a route when the user deviates by only a little distance, which causes a case of frequently prompting the user.

Analysis shows that, in the pedestrian navigation service, a road width difference imposes relatively large impact on navigation accuracy. A general walking road is mainly an internal road of, for example, a school, a park, a residential area, and a block, or a path; and a half road width (that is, half of an entire road width) is generally 1-10 meters; and for a traffic trunk street in a big city, the half road width may be more than 10 meters. However, in the navigation prompt process of the prior art described above, a road width difference between road sections on a preset planning route is not considered.

Therefore, this embodiment provides a pedestrian navigation prompt method for determining a navigation prompt time based on a road section width.

Specifically, when a user needs navigation, the user may preset a departure place and a destination on a terminal device; or, if there is a default departure place on the terminal device, the user needs to set only a destination. For example, a setting manner may be a text input manner, a voice input manner, a manner of clicking and selecting on a map, or the like. A specific setting process is similar to an existing navigation setting process, which is not further described herein.

If the departure place and the destination are determined, the terminal device may obtain navigation planning route information. For example, the terminal device may obtain, according to the departure place and the destination, the navigation planning route information from the departure place to the destination by invoking a third-party service, for example, by invoking the Baidu Maps or the Google Maps.

The navigation planning route information includes route information of all road sections from the departure place to the destination. Each road section, for example, may be represented by latitude and longitude of a starting point and an ending point of the road section.

In a navigation process, the terminal device may use a positioning function to obtain a current position of the user, and the process, for example, may use a global positioning system (Global Positioning System, GPS for short) positioning function, or optionally, may use a BeiDou positioning function. In a premise that the positioning function is enabled, the terminal device may periodically or aperiodically obtain a current position of the user. Preferably, the terminal device may obtain a current position of the user at regular intervals. The obtained current position of the user, for example, may be latitude and longitude information. Optionally, the terminal device may further obtain positioning precision, for example, GPS positioning precision; the GPS positioning precision, for example, may be represented by using a positioning radius, where the positioning radius, for example, may be 5 m, 10 m, or 15 m, and a smaller radius indicates higher positioning precision.

The terminal device determines, according to the current position of the user and the navigation planning route information, a road section on which the user is currently located. For example, the terminal device may match latitude and longitude of the current position of the user with latitude and longitude information of all road sections in the navigation planning route information, so as to determine the road section on which the user is currently located.

After determining the road section on which the user is currently located, the terminal device obtains, according to a positioning result obtained when the user walks on the road section and route information of the road section, a road width of the road section on which the user is currently located. The obtaining process may be implemented by using the following two manners:

A first manner: The terminal device performs local processing and acquires, according to the positioning result obtained when the user walks on the road section and the route information of the road section, the road width of the road section on which the user is currently located.

A second manner: The terminal device sends, to a network side device, for example, a base station or a radio network controller, the positioning result obtained when the user walks on the road section and the route information of the road section; the network side device obtains, according to the positioning result obtained when the user walks on the road section and the route information of the road section, the road width of the road section on which the user is currently located, and sends the obtained road width to the terminal device, so that the terminal device may obtain the road width of the road section on which the user is currently located.

Either in the first manner or in the second manner described above, the obtaining, according to the positioning result obtained when the user walks on the road section and the route information of the road section, the road width of the road section on which the user is currently located may be implemented, for example, by using the following processing processes:

Single-positioning manner: calculating, according to one positioning result obtained when the user walks on the road section, a perpendicular distance from a position of the user on the road section to a center line of the road section, where the road width of the road section is twice the perpendicular distance.

Optionally, the terminal device may further use the positioning precision as a confidence level, where the confidence level represents an accuracy degree of estimating the road width this time.

Multiple-positioning manner: calculating, according to at least two positioning results obtained when the user walks on the road section, perpendicular distances from at least two positions of the user on the road section to a center line of the road section, and performing weighted average on the perpendicular distances according to positioning precision corresponding to the positioning results, where the road width of the current road section is twice a weighted average value.

Optionally, the terminal device may further obtain the confidence level according to a quantity of positioning times, a variance of the road widths obtained by the calculations, and mean positioning precision.

After obtaining the road width, the terminal device determines a navigation prompt time according to the road width, and perform navigation prompting for the user according to the navigation prompt time.

Specifically, by using the turning prompt, the terminal device adjusts a size of a turning prompt range according to the road width.

For example, the adjusting a size of a turning prompt range according to the road width may be: determining whether the road width of the road section on which the user is currently located is greater than a preset width; if the road width is greater than the preset width, expanding the turning prompt range according to the road width; and if the road width is less than or equal to the preset width, narrowing the turning prompt range according to the road width or using a default turning prompt range.

Further, when adjusting the size of the turning prompt range according to the road width, the terminal device may further consider the foregoing confidence level; for example, it is determined whether the road width of the road section on which the user is currently located is greater than a preset width and whether the confidence level is greater than a preset confidence level; if the road width is greater than the preset width and the confidence level is greater than the preset confidence level, the turning prompt range is expanded according to the road width; otherwise, the turning prompt range is narrowed according to the road width or a default turning prompt range is used.

It should be noted that, the default turning prompt range mentioned above, for example, may be obtained by testing multiple typical road samples.

In view of this, if the road section on which the user is currently located is relatively wide, the turning prompt range may be adjusted a little larger, so as to avoid a problem that the terminal device may prompt the user to turn only when the user is close to the turning intersection or even after the user passes through the turning intersection because the turning prompt range is too small, which achieves an objective of prompting the user in time. If the road section on which the user is currently located is relatively narrow, the turning prompt range may be adjusted smaller or the default turning prompt range may be used, so as to avoid a problem that the terminal device prompts the user to turn at a non-turning intersection of a previous road section because the turning prompt range is too large, which prevents the user from turning incorrectly.

The terminal device determines a turning prompt time by adjusting the turning prompt range, so as to perform turning prompting for the user according to the turning prompt time. After the user walks into the turning prompt range, the terminal device performs turning prompting for the user.

By using the route-replanning prompt as an example, the terminal device may adjust a size of an adjacent road section region according to the road width.

For example, the adjusting a size of an adjacent road section region according to the road width may be: determining whether the road width of the road section on which the user is currently located is greater than a preset width; if the road width is greater than the preset width, expanding the adjacent road section region according to the road width; and if the road width is less than or equal to the preset width, narrowing the adjacent road section region according to the road width or using a default adjacent road section region.

Further, when adjusting the size of the adjacent road section region according to the road width, the terminal device may further consider the foregoing confidence level; for example, it is determined whether the road width of the road section on which the user is currently located is greater than a preset width and whether the confidence level is greater than a preset confidence level; if the road width is greater than the preset width and the confidence level is greater than the preset confidence level, the adjacent road section region is expanded according to the road width; otherwise, the adjacent road section region is narrowed according to the road width or a default adjacent road section region is used.

In view of this, if the road section on which the user is currently located is relatively wide, the adjacent road section region may be adjusted a little larger, so as to avoid a problem that the terminal device frequently prompts the user to replan a route because the adjacent road section region is too small. If the road section on which the user is currently located is relatively narrow, the adjacent road section region may be adjusted smaller or the default adjacent road section region may be used, so as to avoid a problem that the terminal device prompts the user to replan a route after the user deviates from a planning road section by a relatively long distance because the adjacent road section region is probably too large, which can ensure timely prompting.

The terminal device determines a turning prompt time by adjusting the turning prompt range, so as to perform turning prompting for the user according to the turning prompt time. After the user walks into the turning prompt range, the terminal device performs turning prompting for the user.

In this embodiment, according to a current position of a user and navigation planning route information, a road section on which the user is currently located may be determined; then a road width of the road section is obtained according to a positioning result obtained when the user walks on the road section and route information of the road section; a navigation prompt time is further determined according to the road width, and navigation prompt is performed for the user according to the navigation prompt time. Therefore, on each road section of a navigation planning route, a navigation prompt time can be dynamically adjusted according to a road width of the road section, so as to solve a technical problem, in the prior art, of inaccurate navigation caused by a road width difference between the road sections.

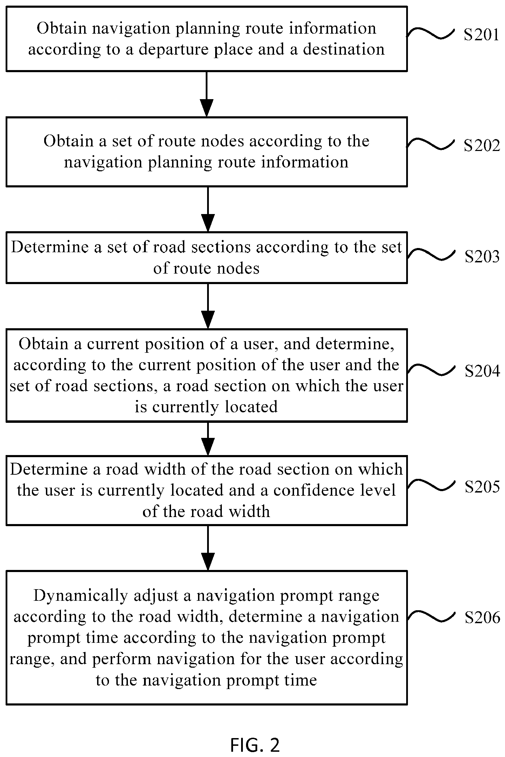

FIG. 2 is a flowchart of a second embodiment of a pedestrian navigation processing method according to an embodiment of the present invention. As shown in FIG. 2, the method in this embodiment includes: S201. Obtain navigation planning route information according to a departure place and a destination.

The navigation planning route information may include a set of multiple route points that identify a navigation planning route and related information, and a line between every two adjacent route points is marked as a road section. Each route point may be represented, for example, by using latitude and longitude, and the related information may be, for example, a total length of the planning route and a quantity of route points of the planning route.

S202. Obtain a set of route points according to the navigation planning route information.

The terminal device may obtain the set of route points $\{P_0, P_1, ..., P_{k-1}\}$ from the navigation planning route information, where K is a total quantity of route points of the planning route, $P_0$ represents latitude and longitude corresponding to the departure place, and $P_{k-1}$ represents latitude and longitude corresponding to the destination.

S203. Determine a set of road sections according to the set of route points.

After the set of route points is determined, the terminal device may further determine the set of road sections $\{Sec_0, Sec_1..., Sec_{k-2}\}$, for example, a road section $Sec_i$ ($0 \leq i \leq N-2$) is determined by route points $P_i$ and $P_{i+1}$ in the set of route points.

S204. Obtain a current position of a user, and determine, according to the current position of the user and the set of road sections, a road section on which the user is currently located.

S205. Determine a road width of the road section on which the user is currently located and a confidence level of the road width.

It is assumed that the user is walking on the road section $Sec_i$ that includes the point $P_i$ and the point $P_{i+1}$, and N periodic positioning results are $(L, Rad) = \{(L_0, Rad_0), (L_1, Rad_1), ..., (L_{N-1}, Rad_{N-1})\}$, where L represents latitude and longitude, Rad represents a positioning radius, the positioning radius may represent positioning precision, and a larger positioning radius indicates lower positioning precision. A road width $W_i$ of the road section $Sec_i$ is a weighted average of perpendicular distances between the N positioning results and a road center line of the road section $Sec_i$. Specifically, $W_i$ may be calculated by using formula (1):

$$W_i = \left( \sum_{k=1}^{N} \omega_k \cdot Dist(Sec_i, L_k) \right) / \sum_{k=1}^{N} \omega_k \qquad (1)$$

where $\omega_k$ is a weight factor, $Dist(Sec_i, L_k)$ is a perpendicular distance between the $k^{th}$ positioning result and the road center line of the road section $Sec_i$. When $\omega_k = 1$, $W_i$ is an average value of multiple calculation results:

$$W_i = \left( \sum_{k=1}^{N} Dist(Sec_i, L_k) \right) / N .$$

Preferably, the weight factor may be set as a decreasing function of the positioning radius; a smaller positioning radius indicates higher positioning precision and a higher contribution degree of a corresponding road width estimation result:

$$W_i = \left( \sum_{k=1}^{N} \omega(Rad_k) \cdot Dist(Sec_i, L_k) \right) / \sum_{k=1}^{N} \omega(Rad_k).$$

For example, if the user is walking on the road section $Sec_i$, three obtained positioning results are respectively $(L, Rad) = \{(L_0, 5m), (L_1, 15m), (L_2, 10m)\}$, distances from the road center line are respectively $Dist = \{13.2m, 14.7m, 12.6m\}$, and values of the weight factor may be:

$$\omega = \begin{cases} \dfrac{1}{2}, & Rad \leq 5 \\ \dfrac{1}{3}, & 5 < Rad \leq 10, \\ \dfrac{1}{6}, & Rad > 10 \end{cases}$$

the road width obtained by estimation is:

$$W_i = \left( \sum_{k=1}^{N} \omega(Rad_k) \cdot Dist(Sec_i, L_k) \right) / \sum_{k=1}^{N} \omega(Rad_k)$$

$$= 13.2 \times 0.5 + 14.7 \times \frac{1}{6} + 12.6 \times \frac{1}{3} = 13.25m$$

A confidence level $Conf_i$ relates to a quantity of positioning times N, a variance of all $Dist(Sec_i, L_k)$, and mean positioning precision; if the quantity of positioning times is too small, $Dist(Sec_i, L_k)$ floats drastically (maybe the user is not walking on a road edge), or the mean positioning precision is relatively low, accuracy of the road width estimated this time is affected.

The confidence level $Conf_i$ in this embodiment may be implemented by using the following two methods:

(1) using the following formula (2) to obtain the confidence level $Conf_i$:

$$Conf_i = \Psi(N, \text{var}(Dist), mean(Rad))$$
$$= \alpha_1 \Psi_1(N) + \alpha_2 \Psi_2(\text{var}(Dist)) + \alpha_3 \Psi_3(mean(Rad)) \qquad (2);$$

or

(2) using the following formula (3) to obtain the confidence level $Conf_i$:

$$Conf_i = \Psi(N, \text{var}(Dist), mean(Rad))$$
$$= \Psi_1(N)^{\alpha_1} \cdot \Psi_2(\text{var}(Dist))^{\alpha_2} \cdot \Psi_2(mean(Rad))^{\alpha_3}$$

where coefficients meet $\alpha_1 + \alpha_2 + \alpha_3 = 1$, $\Psi_1(.)$ is an increasing function of the quantity of positioning times N, $\Psi_2(.)$ is a decreasing function of the variance var($Dist$) of all $Dist(Sec_i, L_k)$, and $\Psi_3(.)$ is an increasing function of mean positioning precision $mean(Rad)$ (a decreasing function of a mean positioning radius).

S206. Dynamically adjust a navigation prompt range according to the road width, determine a navigation prompt time according to the navigation prompt range, and perform navigation for the user according to the navigation prompt time.

By using a turning prompt : A turning prompt range is flexibly adjusted with the road width of the road section on which the user is located before turning; and when the road width increases, the turning prompt range also increases, and when the road width decreases, the turning prompt range also decreases.

It should be noted that the turning prompt range in this embodiment of the present invention is a region range using a connection point of the road section and a next road section as a center, and the region may be circle, oval, square, rectangle, or another shape.

A second adjustment exemplary method: In consideration of uncertainty of the estimation result, the turning prompt range in the first adjustment method described above is flexibly adjusted with the road width of the road section on which the user is located before turning only when the confidence level is greater than a preset confidence level; otherwise, a preset default turning prompt range is used.

A third adjustment exemplary method: Because the road width obtained by estimation may be less than an actual road width on account of a factor such as that the user does not walk on either side of the road, a next turning prompt range $\mathrm{R}_{i+1}^{turn}$ may be adjusted specific to a relatively wide road section:

$$\mathrm{R}_{i+1}^{turn} = \begin{cases} R^{turn}(W_i), & W_i > W_{ref} \\ R_{default}^{turn}, & W_i \leq W_{ref} \end{cases} \text{, where } R_{default}^{turn} \subset R^{turn}(W_i) \text{,}$$

where a reference value of the road width $W_{ref}$ is used to differentiate between a regular road and a relatively wide road; for the regular road that meets $W_i \leq W_{ref}$, a default turning prompt range $R_{default}^{turn}$ is used, and for the relatively wide road that meets $W_i > W_{ref}$, an increasing function $R^{turn}(W_i)$ of W is used for setting. $W_{ref}$ may be obtained by statistics after extracting multiple typical walking road samples, and the default turning prompt range $R_{default}^{turn}$ may be obtained by testing the multiple typical walking road samples, so that better prompt effect can be achieved for most typical walking roads.

A fourth adjustment exemplary method: In consideration of uncertainty of the estimation result, for the third adjustment method described above, the confidence level of the road width obtained by estimation may be further considered at the same time. Dynamic adjustment is performed only when the confidence level of the result obtained by estimation is greater than a preset confidence level, and the road width is greater than a preset width; otherwise, a default turning prompt range is used:

$$\mathrm{R}_{i+1}^{turn} = \begin{cases} R^{turn}(W_i), & if \ Conf > Conf_{th} \ and \ W_i > W_{ref} \\ R_{default}^{turn}, & else \end{cases} \text{, where } R_{default}^{turn} \subset R^{turn}(W_i) \text{.}$$

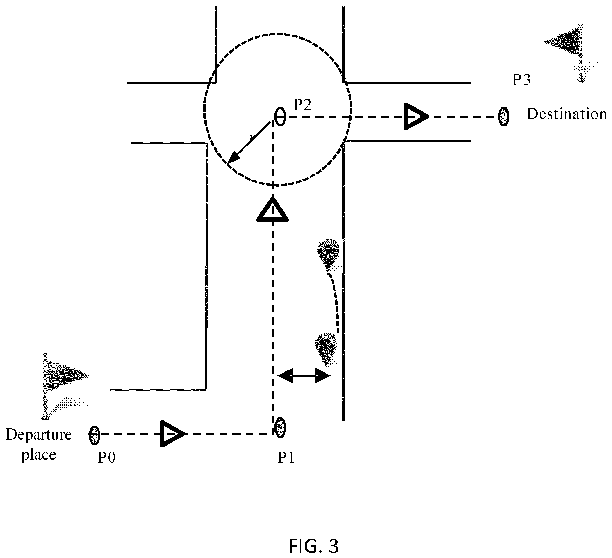

FIG. 3 is a schematic diagram of an adjustment process specific to the turning prompt in the second method embodiment shown in FIG. 2. As shown in FIG. 3, the turning prompt range may be a circular region using a route point as a center, and a radius r of the circular region may be dynamically adjusted according to a road width of a road section before turning, that is, a road section on which the user is currently located and that is between two route points $P_1$ and $P_2$.

Specific to the turning prompt range, the following manners corresponding to the foregoing four adjustment methods may specifically be used for implementation:

A first adjustment method: $r_i = \Phi(W_i)$, where $\Phi(.)$ is a nondecreasing function of the road width $W_i$, and a specific function form may be a linear nondecreasing function of the road width:

$$r_i = \Phi(W_i) = \beta \cdot W_i, \ \text{s.t.} \ \beta > 0.$$

For example, $r_i = \Phi(W_i) = 2W_i$ indicates that the radius of the turning prompt range is twice the road width.

For a specific function form of $\Phi(.)$, a piecewise linear function of the road width may be further used, that is, the radius of the turning prompt range has different growth rates with the road widths in different road width intervals:

$$r_i = \Phi(W_i) = \begin{cases} \beta_1 \cdot W_i, & W_i \in [W_1, W_2) \\ \beta_2 \cdot W_i, & W_i \in [W_2, W_3) \\ \quad \cdots \\ \beta_T \cdot W_i, & W_i \in [W_T, W_{T+1}) \end{cases}$$

For example,
$$r_i = \Phi(W_i) = \begin{cases} 3W_i, & W_i \in [0, 5) \\ 2W_i, & W_i \in [5, 10) \\ 1.5W_i, & W_i \in [10, +\infty) \end{cases}$$

Besides the linear function, $\Phi(.)$ may be further a power function, an exponential function, a logarithmic function, or another nondecreasing function within a positive real number domain or a transformation thereof. For $\beta$ in the foregoing formula, observation data pairs ($W$, $r$) that include different road widths and corresponding preferable turning prompt range radiuses may be obtained by testing multiple road sections, and $\beta$ in the foregoing linear function may be obtained in a linear fitting manner.

A second adjustment method: On the basis of the first adjustment method, a consideration factor of the confidence level is added.

A third adjustment method: $r_{i+1}^{turn} = \begin{cases} r^{turn}(W_i), & W_i > W_{ref} \\ r_{default}^{turn}, & W_i \le W_{ref} \end{cases}$ , where $r_{default}^{turn} < r^{turn}(W_i)$ , where $r^{turn}(W_i)$ is a nondecreasing function of the road width, and may preferably be represented as:

$$r^{turn}(W_i) = r_{default}^{turn} + \alpha \cdot (W_i - W_{ref}),\ s.t.\ \alpha > 0\ .$$

A default turning prompt range radius $r_{default}^{turn}$ may be obtained by testing multiple typical walking road samples, so that better prompt effect can be achieved for most typical walking roads. For $\alpha$ in the foregoing formula, observation data pairs ($W$, $r$) that include different road widths and corresponding preferable turning prompt range radiuses may be obtained by testing multiple relatively wide roads, and $\alpha$ in the foregoing linear function may be obtained in a linear fitting manner.

A fourth adjustment method: On the basis of the third adjustment method, a consideration factor of the confidence level is added.

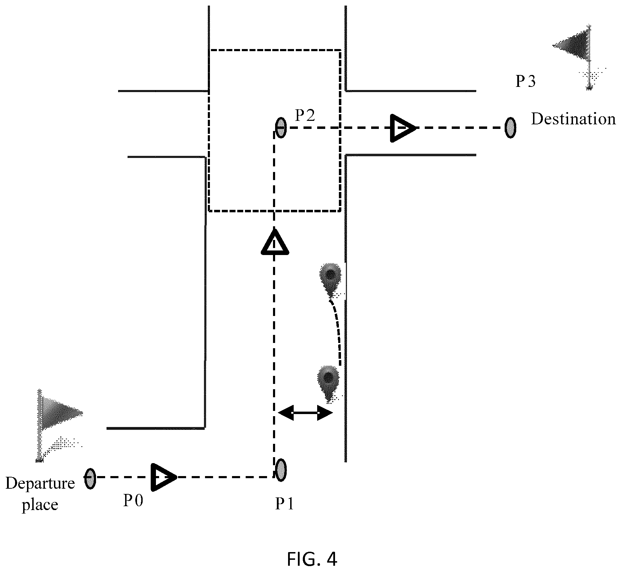

FIG. 4 is a schematic diagram of another adjustment process specific to the turning prompt in the second method embodiment shown in FIG. 2. As shown in FIG. 4, the turning prompt range may be a rectangular region using a route point P2 as a center, and two side lengths of the rectangular region are 2a (a is a half width) and 2b (b is a half height) respectively. A length of the rectangular region limits a turning prompt time (fast or slow), and a width of the rectangular region limits an effective range of turning prompt (prompting is not performed beyond the range). To achieve better prompt effect, two side lengths need to be dynamically adjusted according to the road width of the road section on which the user is located before turning.

Specific to the turning prompt range, the following manners corresponding to the foregoing four adjustment methods may specifically be used for implementation:

A first adjustment method: $a_i = \Upsilon_1(W_i)$, $b_i = \Upsilon_2(W_i)$, where $\Upsilon_1(.)$ and $\Upsilon_2(.)$ are nondecreasing functions of the road width, and specific function forms may be linear nondecreasing functions of the road width:

$$a_i = \Upsilon_1(W_i) = \eta \cdot W_i,\ b_i = \Upsilon_2(W_i) = \gamma \cdot W_i,\ \text{s.t.}\ \eta, \gamma > 0\ .$$

Preferably, $a_i = \Upsilon_1(W_i) = 2W_i$, $b_i = \Upsilon_2(W_i) = 2.5W_i$ may be set.

For specific function forms of $\Upsilon_1(.)$ and $\Upsilon_2(.)$, piecewise linear functions of the road width may be further used, that is, the half width $a_i$ and the half height $b_i$ of the turning prompt range separately have different growth rates with the road widths in different road width intervals:

$$a_i = \Upsilon_1(W_i) == \begin{cases} \eta_1 \cdot W_i, & W_i \in [W_1, W_2) \\ \eta_2 \cdot W_i, & W_i \in [W_2, W_3) \\ \cdots \\ \eta_T \cdot W_i, & W_i \in [W_T, W_{T+1}) \end{cases} \qquad b_i = \Upsilon_1(W_i) == \begin{cases} \gamma_1 \cdot W_i, & W_i \in [W_1, W_2) \\ \gamma_2 \cdot W_i, & W_i \in [W_2, W_3) \\ \cdots \\ \gamma_T \cdot W_i, & W_i \in [W_T, W_{T+1}) \end{cases}.$$

Besides the linear functions, $\Upsilon_1(.)$ and $\Upsilon_2(.)$ may be further power functions, exponential functions, logarithmic functions, or other increasing functions within a positive real number domain or transformations thereof. For $\eta$ and $\gamma$ in the foregoing formulas, observation data pairs ($W,a,b$) that include different road widths and half widths and half heights of preferable turning prompt ranges may be obtained by testing multiple road sections, and $\eta$ and $\gamma$ in the foregoing linear functions may be obtained in a linear fitting manner.

A second adjustment method: On the basis of the first adjustment method, a consideration factor of the confidence level is added.

A third adjustment method: $(a_{i+1}^{turn}, b_{i+1}^{turn}) = \begin{cases} (A^{turn}(W_i), B^{turn}(W_i)), & W_i > W_{ref} \\ (a_{default}^{turn}, b_{default}^{turn}) & W_i \le W_{ref} \end{cases}$, where

$a_{default}^{turn} < A^{turn}(W_i)$, $b_{default}^{turn} < B^{turn}(W_i)$, and $A^{turn}(W_i)$ and $B^{turn}(W_i)$ are nondecreasing functions of the road width, and may preferably be represented as:

$$A^{turn}(W_i) = a_{default}^{turn} + \theta \cdot (W_i - W_{ref}), \; s.t. \; \theta > 0,$$

$$B^{turn}(W_i) = b_{default}^{turn} + \vartheta \cdot (W_i - W_{ref}), \; s.t. \; \vartheta > 0.$$

A half width $a_{default}^{turn}$ and a half height $b_{default}^{turn}$ of a default turning prompt range may be obtained by testing multiple typical walking road samples, so that better prompt effect can be achieved for most typical walking roads. For $\theta$ and $\vartheta$ in the foregoing formulas, observation data pairs ($W,a,b$) that include different road widths and half widths and half heights of preferable turning prompt ranges may be obtained by testing multiple relatively wide roads, and $\theta$ and $\vartheta$ in the foregoing linear functions may be obtained in a linear fitting manner.

A fourth adjustment method: On the basis of the third adjustment method, a consideration factor of the confidence level is added.

By using a route-replanning prompt as an example:

A first adjustment method: A adjacent road section region may be flexibly adjusted with the road width of the road section; when the road width increases, the adjacent road section region also increases, and when the road width decreases, the adjacent road section region also decreases.

A second adjustment method: In consideration of uncertainty of the estimation result, the adjacent road section region in the first adjustment method described above is flexibly adjusted with the road width only when the confidence level is greater than a preset confidence level; otherwise, a default adjacent road section region is used.

A third adjustment method: Because the road width obtained by estimation may be less than an actual road width on account of a factor such as that the user does not walk on either side of the road, the adjacent road section region $R_{i+1}^{dev}$ may be processed only specific to a relatively wide road:

$$R_{i+1}^{dev} = \begin{cases} R^{dev}(W_i), & W_i > W_{ref} \\ R_{default}^{dev}, & W_i \le W_{ref} \end{cases} \text{, where } R_{default}^{turn} \subset R^{turn}(W_i).$$

where a reference value of the road width $W_{ref}$ is used to differentiate between a regular road and a relatively wide road; for the regular road that meets $W_i \le W_{ref}$, a default adjacent road section region $R_{default}^{dev}$ is used, and for the relatively wide road that meets $W_i > W_{ref}$, an increasing function $R^{dev}(W_i)$ of W is used for setting. $W_{ref}$ may be obtained by statistics after extracting multiple typical walking road samples, and the default adjacent road section region $R_{default}^{dev}$ may be obtained by testing the multiple typical walking road samples, so that better prompt effect can be achieved for most typical walking roads.

A fourth adjustment method: In consideration of uncertainty of the estimation result, for the third adjustment method described above, the confidence level of the road width obtained by estimation may be further considered at the same time. Dynamic adjustment is performed only when the confidence level of the result obtained by estimation is greater than a preset confidence level, and the road width is greater than a preset width; otherwise, a default adjacent road section region is used:

$$\mathrm{R}_{i}^{dev} = \begin{cases} R^{dev}(W_i), & if \ Conf > Conf_{th} \ and \ W_i > W_{ref} \\ \mathrm{R}_{default}^{dev}, & else \end{cases},$$

Based on the foregoing adjusted navigation prompt range, the terminal device may determine a navigation prompt time, which enables to prompt the user accurately specific to different road section widths.

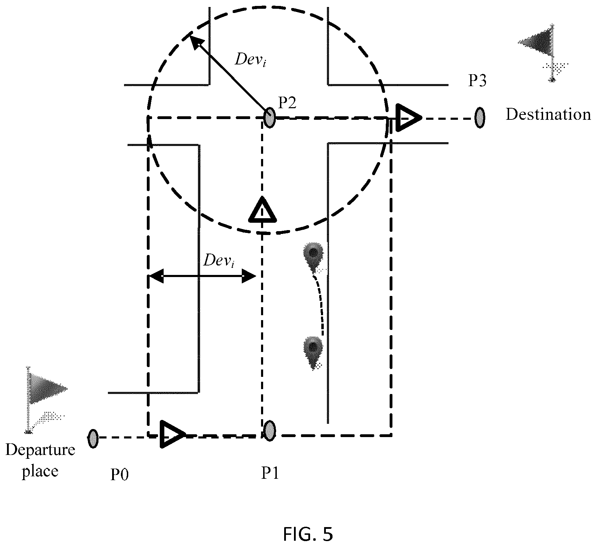

FIG. 5 is a schematic diagram of an adjustment process specific to the route-replanning prompt in the second method embodiment shown in FIG. 2. As shown in FIG. 5, the adjacent road section region may be formed by superposition of a rectangular region and a circular region, where the rectangular region uses a road section center line as an axis, a height of the rectangular region is a length of a line of road section points, and a half width of the rectangular region is a deviation threshold $Dev_i$, and the circular region uses a road section ending point as a center, and a radius of the circular region is the deviation threshold $Dev_i$. The deviation threshold $Dev_i$ may be dynamically adjusted according to a road width of a road section on which the user is located before turning.

Specific to the deviation threshold, the following manners corresponding to the foregoing four adjustment methods may specifically be used for implementation:

A first adjustment method: $Dev_i = \Theta(W_i)$,

$\Theta(.)$ is a nondecreasing function of the road width, and a specific functional form may be a linear nondecreasing function of the road width:

$$Dev_i = \Theta(W_i) = \lambda \cdot W_i, \ \ \text{s.t.} \ \lambda > 0.$$

For example, $Dev_i = \Theta(W_i) = 4 \cdot W_i$ indicates that the deviation threshold is quadruple the road width.

For a specific functional form of $\Theta(W_i)$, a piecewise linear function of the road width may be further used, that is, the deviation threshold has different growth rates with the road widths in different road width intervals:

$$Dev_i = \Theta(W_i) = \begin{cases} \lambda_1 \cdot W_i, & W_i \in [W_1, W_2) \\ \lambda_2 \cdot W_i, & W_i \in [W_2, W_3) \\ \ \ \ \ ... \\ \lambda_T \cdot W_i, & W_i \in [W_T, W_{T+1}) \end{cases}$$

For example, $$Dev_i = \Theta(W_i) = \begin{cases} 7W_i, & W_i \in [0,5) \\ 5W_i, & W_i \in [5,10) \\ 4W_i, & W_i \in [10, +\infty) \end{cases}$$

Besides the linear function, $\Theta(.)$ may be further a power function, an exponential function, a logarithmic function, or another nondecreasing function within a positive real number domain or a transformation thereof. For $\lambda$ in the foregoing formula, observation data pairs $(W, Dev)$ that include different road widths and corresponding preferable deviation thresholds may be obtained by testing multiple roads, and $\lambda$ in the foregoing linear function may be obtained in a linear fitting manner.

A second adjustment method: On the basis of the first adjustment method, a consideration factor of the confidence level is added.

A third adjustment method:

$$Dev_{i+1} = \begin{cases} \Omega(W_i), & W_i > W_{ref} \\ Dev_{default}, & W_i \leq W_{ref} \end{cases} \text{, where } r_{default}^{turn} < r^{turn}(W_i) \text{,}$$

where $\Omega(W_i)$ is a nondecreasing function of the road width, and may preferably be represented as:

$$\Omega(W_i) = Dev_{default} + \omega \cdot (W_i - W_{ref}), \ s.t. \ \omega > 0.$$

A default deviation threshold $Dev_{default}$ may be obtained by testing multiple typical walking road samples, so that better prompt effect can be achieved for most typical walking roads. For $\omega$ in the foregoing formula, observation data pairs $(W,Dev)$ that include different road widths and corresponding preferable deviation thresholds may be obtained by testing multiple relatively wide roads, and $\omega$ in the foregoing linear function may be obtained in a linear fitting manner.

A fourth adjustment method: On the basis of the third adjustment method, a consideration factor of the confidence level is added.

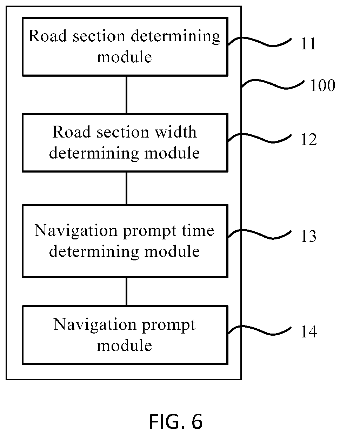

FIG. 6 is a schematic structural diagram of a first embodiment of a terminal device according to an embodiment of the present invention. As shown in FIG. 6, a terminal device 100 in this embodiment may include: a road section determining module 11, a road section width determining module 12, a navigation prompt time determining module 13, and a navigation prompt module 14.

The road section determining module 11 is configured to determine, according to a current position of a user and navigation planning route information, a road section on which the user is currently located, where the navigation planning route information includes route information of all road sections between a departure place and a destination.

The road section width determining module 12 is configured to obtain a road width of the road section according to a positioning result obtained when the user walks on the road section and route information of the road section, and send the road width of the road section to the navigation prompt time determining module 13.

The navigation prompt time determining module 13 is configured to receive the road width of the road section sent by the road section width determining module 12, determine, according to the road width, a navigation prompt time corresponding to the road section, and send the navigation prompt time to the navigation prompt module 14.

The navigation prompt module 14 is configured to receive the navigation prompt time sent by the navigation prompt time determining module 13, and perform navigation prompting for the user according to the navigation prompt time.

The terminal device in this embodiment may be used to execute the technical solution of the method embodiment shown in FIG. 1, implementation principles and technical effect thereof are similar, and details are not further described herein.

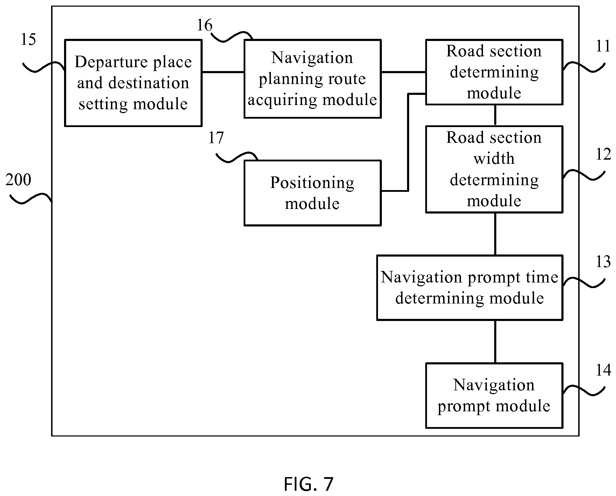

FIG. 7 is a schematic structural diagram of a second embodiment of a terminal device according to an embodiment of the present invention. As shown in FIG. 7, a terminal device 200 in this embodiment, based on the terminal device shown in FIG. 6, may further include: a departure place and destination setting module 15, a navigation planning route obtaining module 16, and a positioning module 17.

Specifically, when a user needs navigation, the user may preset a departure place and a destination by using the departure place and destination setting module 15; or, if there is a default departure place in the terminal device, the user needs to set only a destination. For example, a setting manner may be a text input manner, a voice input manner, a manner of clicking and selecting on a map, or the like. A specific setting process is similar to an existing navigation setting process, which is not further described herein.

After the departure place and the destination are determined, navigation planning route information may be obtained by using the navigation planning route obtaining module 16. For example, according to the departure place and the destination, navigation planning route information from the departure place to the destination may be obtained by invoking a third-party service, for example, by invoking the Baidu Maps or the Google Maps.

In a navigation process, a current position of the user may be obtained by using a positioning function of the positioning module 17, and the process, for example, may use a GPS positioning function, or optionally, may use a BeiDou positioning function. In a premise that the positioning function is enabled, the positioning module 17 may periodically or aperiodically obtain a current position of the user. Preferably, the positioning module 17 may obtain a current position of the user at regular intervals. The obtained current position of the user, for example, may be latitude and longitude information. Optionally, the positioning module 17 may further obtain positioning precision, for example, GPS positioning precision; the GPS positioning precision, for example, may be represented by using a positioning radius, where the positioning radius, for example, may be 5 m, 10 m, or 15 m, and a smaller radius indicates higher positioning precision. The road section determining module 11 may determine a road section on which the user is currently located by using the navigation planning route obtaining module 16 and the positioning module 17. Specifically, the road section determining module 11 may be configured to match latitude and longitude of the current position of the user with latitude and longitude of a starting point and latitude and longitude of an ending point of all road sections in the navigation planning route information, to determine the road section on which the user is currently located.

In this embodiment, the road section width determining module 12 is specifically configured to: send, to a network side device, the positioning result obtained when the user walks on the road section and the route information of the road section, to request the network side device to obtain a road width of the road section according to the positioning result and the route information of the road section; and receive the road width of the road section sent by the network side device.

In an implementation manner, the road section width determining module 12 is specifically configured to: determine a current position of the user according to one positioning result obtained when the user walks on the road section; determine, according to the route information of the road section, a center line of the road section on which the user is currently located; determine a perpendicular distance between the current position of the user and the center line of the road section on which the user is currently located; and use the perpendicular distance as a half road width of the road section on which the user is currently located.

Correspondingly, the navigation prompt time determining module 13 is specifically configured to: adjust, according to the road width, a navigation prompt range corresponding to the road section; or, adjust, according to the road width and a confidence level of the road width, a navigation prompt range corresponding to the road section, where the confidence level of the road width is positioning precision of the one positioning result; and determine the navigation prompt time according to the adjusted navigation prompt range.

In another implementation manner, the road section width determining module 12 is specifically configured to: determine at least two positions of the user according to at least two positioning results obtained when the user walks on the road section; determine, according to the route information of the road section, a center line of the road section on which the user is currently located; determine a perpendicular distance between each position of the at least two positions and the center line of the road section on which the user is currently located; perform weighted average on the determined perpendicular distances according to positioning precision of the at least two positioning results; and use a perpendicular distance obtained by performing weighted average as a half road width of the road section on which the user is currently located.

Correspondingly, the navigation prompt time determining module 13 is specifically configured to: adjust, according to the road width, a navigation prompt range corresponding to the road section; or, adjust, according to the road width and a confidence level of the road width, a navigation prompt range corresponding to the road section, where the confidence level of the road width is determined according to a quantity of positioning times of the at least two positioning results, a variance of the perpendicular distances, and mean positioning precision; and determine the navigation prompt time according to the adjusted navigation prompt range.

In the foregoing two possible implementation manners, the navigation prompt time determining module 13 is specifically configured to, if the road width is greater than a preset width, expand the navigation prompt range; otherwise, narrow the navigation prompt range or use a default navigation prompt range; or the navigation prompt time determining module 13 is specifically configured to, if the road width is greater than a preset width and the confidence level is greater than a preset confidence level, expand the navigation prompt range; otherwise, narrow the navigation prompt range or use a default navigation prompt range.

In specific implementation, if the navigation prompt range is a turning prompt range corresponding to the road section, where the turning prompt range is a region range using a connection point of the road section and a next road section as a center; and the navigation prompt time determining module 13 is specifically configured to, if the user enters an adjusted turning prompt range, determine that a turning prompt time comes.

If the navigation prompt range is an adjacent road section region corresponding to the road section, where the adjacent road section region is a region range using a center line of the road section as a center; and the navigation prompt time determining module 13 is specifically configured to, if the user walks out of an adjusted adjacent road section region, determine that a route-replanning prompt time comes.

The terminal device in this embodiment may be used to execute the technical solution of the method embodiment shown in FIG. 2, implementation principles and technical effect thereof are similar, and details are not further described herein.

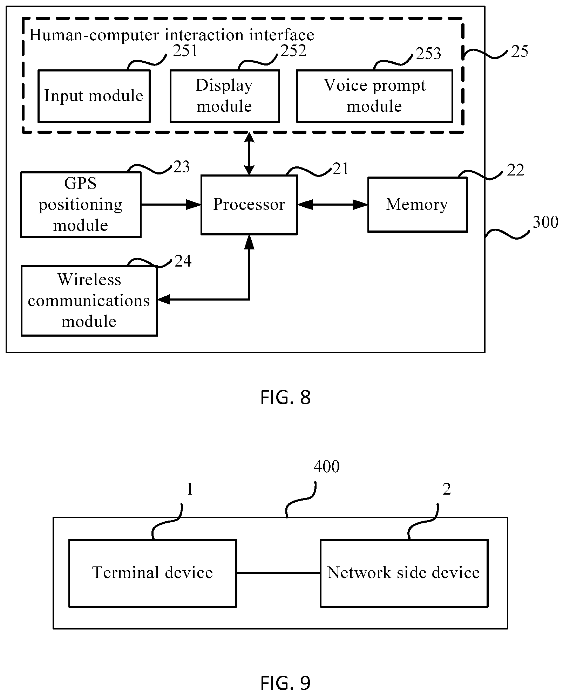

FIG. 8 is a schematic structural diagram of a third embodiment of a terminal device according to an embodiment of the present invention. As shown in FIG. 8, FIG. 8 is a schematic diagram of a hardware structure of a terminal device 300 in this embodiment, and the terminal device may include: a processor 21, a memory 22, a GPS positioning module 23, a wireless communications module 24, and a human-computer interaction interface 25. The human-computer interaction interface 25 may include an input module 251, a display module 252, and a voice prompt module 253.

Specifically, the memory 22 may store software code that implements the navigation function in the foregoing embodiments of the present invention. A user may input, by using the input module 251 in the human-computer interaction interface 25, a departure place and a destination to the processor 21; and the GPS positioning module 23 may periodically or aperiodically locate a position of the user. The processor 21 may execute the navigation processing process described in the foregoing embodiments by invoking the software code in the memory 22, and perform navigation prompting for the user by using the voice prompt module 253. In addition, the terminal device may perform interaction with a network side device by using the wireless communications module 24, so as to request the network side device to calculate road widths of all road sections required in the navigation process. In addition, the terminal device may further invoke a third-party service by using the wireless communications module 24, for example, by invoking the Baidu Maps or the Google Maps, to obtain navigation planning route information from the departure place to the destination.

The terminal device in this embodiment may be used to execute the technical solution of the method embodiment shown in FIG. 1 or FIG. 2, implementation principles and technical effect thereof are similar, and details are not further described herein.

FIG. 9 is a schematic structural diagram of an embodiment of a pedestrian navigation processing system according to an embodiment of the present invention. As shown in FIG. 9, a system 400 in this embodiment may include: a terminal device 1 and a network side device 2, where

the terminal device 1 is configured to: determine, according to a current position of a user and navigation planning route information, a road section on which the user is currently located, where the navigation planning route information includes route information of all road sections between a departure place and a destination; send, to the network side device, a positioning result obtained when the user walks on the road section and route information of the road section, to request the network side device 2 to obtain a road width of the road section according to the positioning result and the route information of the road section, and receive the road width of the road section sent by the network side device 2; determine, according to the road width, a navigation prompt time corresponding to the road section; and perform navigation prompting for the user according to the navigation prompt time; and

the network side device 2 is configured to: receive the positioning result obtained when the user walks on the road section and the route information of the road section that are sent by the terminal device 1; obtain the road width of the road section according to the positioning result and the route information of the road section; and send the road width of the road section to the terminal device.

For the terminal device in this embodiment, a terminal device in any embodiment shown in the foregoing FIG. 6 to FIG. 8 may be used; and the network side device 2 may be, for example, any network side device such as a base station or a base station controller in an existing network architecture, which is not limited by the embodiment.

It can be seen that the embodiments of the present invention provide a pedestrian navigation processing method and system, and a terminal device, which may determine, according to a current position of a user and navigation planning route information, a road section on which the user is currently located; then obtain a road width of the road section according to a positioning result obtained when the user walks on the road section and route information of the road section; and further determine a navigation prompt time according to the road width, and perform navigation prompting for the user according to the navigation prompt time. Therefore, on each road section of a navigation planning route, a navigation prompt time can be dynamically adjusted according to a road width of the road section, so as to resolve a problem, in the prior art, of inaccurate navigation caused by a road width difference between the road sections, thereby effectively improving guiding effect of navigation.

The embodiments in this specification are all described in a progressive manner, for same or similar parts in the embodiments, reference may be made to these embodiments, and each embodiment focuses on a difference from other embodiments.

It should be noted that the described apparatus embodiment is merely exemplary. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. In addition, in the accompanying drawings of the apparatus embodiments provided by the present invention, connection relationships between modules indicate that the modules have communication connections with each other, which may be specifically implemented as one or more communications buses or signal cables. A person of ordinary skill in the art may understand and implement the embodiments of the present invention without creative efforts.

Based on the description of the foregoing implementation manners, a person skilled in the art may clearly understand that the present invention may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be of various forms, for example, in a form of an analog circuit, a digital circuit, a dedicated circuit, or the like.

However, as for the present invention, software program implementation is a better implementation manner in most cases. Based on such an understanding, the technical solutions of the present invention essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, or the like) to perform the methods described in the embodiments of the present invention.

Finally, it should be noted that the foregoing embodiments are merely intended for describing the technical solutions of the present invention, but not for limiting the present invention.

**Claims**

1.　A pedestrian navigation processing method, comprising:

determining (S101), by a terminal device, according to a current position of a user and navigation planning route information, a road section on which the user is currently located, wherein the navigation planning route information comprises route information of all road sections between a departure place and a destination;
obtaining (S102), by the terminal device, a road width of the road section according to a positioning result obtained when the user walks on the road section and route information of the road section;
determining (S103), by the terminal device, according to the road width, a navigation prompt time corresponding to the road section, wherein the navigation prompt time is a turning prompt time; and
performing, by the terminal device, navigation prompting for the user according to the navigation prompt time;
wherein the step of determining, by the terminal device, according to the road width, a navigation prompt time corresponding to the road section comprises:
adjusting, by the terminal device, a navigation prompt range according to the road width, wherein when the road width increases, the navigation prompt range also increases, and when the road width decreases, the navigation prompt range also decreases, and wherein the navigation prompt range is a region range using a connection point of the road section and a next road section as a center; and
determining, by the terminal device, a navigation prompt time according to the adjusted navigation prompt range, wherein the navigation prompt time is a moment when the user walks into the navigation prompt range.

2.　The method according to claim 1, wherein the step of obtaining, by the terminal device, a road width of the road section according to a positioning result obtained when the user walks on the road section and route information of the road section comprises:

sending, by the terminal device, to a network side device, the positioning result obtained when the user walks on the road section and the route information of the road section, to request the network side device to obtain the road width of the road section according to the positioning result and the route information of the road section; and
receiving, by the terminal device, the road width of the road section sent by the network side device.

3.　The method according to claim 1, wherein the step of obtaining, by the terminal device, a road width of the road section according to a positioning result obtained when the user walks on the road section and route information of the road section comprises:

determining, by the terminal device, a current position of the user according to one positioning result obtained when the user walks on the road section;
determining, by the terminal device according to the route information of the road section, a center line of the road section on which the user is currently located;
determining, by the terminal device, a perpendicular distance between the current position of the user and the center line of the road section on which the user is currently located; and
using, by the terminal device, the perpendicular distance as a half road width of the road section on which the user is currently located.

4.　The method according to claim 3, wherein the step of determining, by the terminal device according to the road width, a navigation prompt time corresponding to the road section comprises:

adjusting, according to the road width and a confidence level of the road width, the navigation prompt range corresponding to the road section, wherein the confidence level of the road width is the positioning precision of the one positioning result; and

determining, by the terminal device, the navigation prompt time according to the adjusted navigation prompt range.

5. The method according to claim 1, wherein the step of obtaining, by the terminal device, a road width of the road section according to a positioning result obtained when the user walks on the road section and route information of the road section comprises:

determining, by the terminal device, at least two positions of the user according to at least two positioning results obtained when the user walks on the road section;

determining, by the terminal device according to the route information of the road section, a center line of the road section on which the user is currently located;

determining, by the terminal device, a perpendicular distance between each position of the at least two positions and the center line of the road section on which the user is currently located;

performing, by the terminal device, weighted average on the determined perpendicular distances according to positioning precision of the at least two positioning results; and

using, by the terminal device, a perpendicular distance obtained by performing weighted average as a half road width of the road section on which the user is currently located.

6. The method according to claim 5, wherein the step of determining, by the terminal device, according to the road width, a navigation prompt time corresponding to the road section comprises:

adjusting, according to the road width and a confidence level of the road width, the navigation prompt range corresponding to the road section, wherein the confidence level of the road width is determined according to a quantity of positioning times of the at least two positioning results, a variance of the perpendicular distances, and mean positioning precision; and

determining, by the terminal device, the navigation prompt time according to the adjusted navigation prompt range.

7. The method according to claim 4 or 6, wherein
the step of adjusting, by the terminal device according to the road width, a navigation prompt range corresponding to the road section comprises:

if the road width is greater than a preset width, expanding, by the terminal device, the navigation prompt range; otherwise, narrowing the navigation prompt range or using a default navigation prompt range; and

the step of adjusting, by the terminal device according to the road width and a confidence level of the road width, a navigation prompt range corresponding to the road section comprises:

if the road width is greater than a preset width and the confidence level is greater than a preset confidence level, expanding, by the terminal device, the navigation prompt range; otherwise, narrowing the navigation prompt range or using a default navigation prompt range.

8. The method according to any one of claims 1 to 7, wherein the step of determining, by the terminal device according to a current position of a user and navigation planning route information, a road section on which the user is currently located comprises:
matching, by the terminal device, latitude and longitude of the current position of the user with latitude and longitude of a starting point and latitude and longitude of an ending point of all road sections in the navigation planning route information, to determine the road section on which the user is currently located.

9. A terminal device, comprising:

a road section determining module (11), configured to determine, according to a current position of a user and navigation planning route information, a road section on which the user is currently located, wherein the navigation planning route information comprises route information of all road sections between a departure place and a destination;

a road section width determining module (12), configured to obtain a road width of the road section according to a positioning result obtained when the user walks on the road section and route information of the road section, and send the road width of the road section to a navigation prompt time determining module (13);

the navigation prompt time determining module (13), configured to receive the road width of the road section sent by the road section width determining module (12), determine, according to the road width, a navigation prompt time corresponding to the road section, and send the navigation prompt time to a navigation prompt module (14), wherein the navigation prompt time is a turning prompt time; and

the navigation prompt module (14), configured to receive the navigation prompt time sent by the navigation prompt time determining module (13), and perform navigation prompting for the user according to the navigation prompt time, wherein

the navigation prompt time determining module is configured to: adjust, according to the road width, a navigation prompt range corresponding to the road section, wherein when the road width increases, the navigation prompt range also increases, and when the road width decreases, the navigation prompt range also decreases, and wherein the navigation prompt range is a region range using a connection point of the road section and a next road section as a center; and

determine the navigation prompt time according to the adjusted navigation prompt range, wherein the navigation prompt time is a moment when the user walks into the navigation prompt range.

10. The terminal device according to claim 9, wherein the road section width determining module (12) is specifically configured to: send, to a network side device, the positioning result obtained when the user walks on the road section and the route information of the road section, to request the network side device to obtain the road width of the road section according to the positioning result and the route information of the road section; and receive the road width of the road section sent by the network side device.

11. The terminal device according to claim 9, wherein the road section width determining module (12) is specifically configured to: determine a current position of the user according to one positioning result obtained when the user walks on the road section; determine, according to the route information of the road section, a center line of the road section on which the user is currently located; determine a perpendicular distance between the current position of the user and the center line of the road section on which the user is currently located; and use the perpendicular distance as a half road width of the road section on which the user is currently located.

12. The terminal device according to claim 11, wherein the navigation prompt time determining module (13) is specifically configured to: adjust, according to the road width and a confidence level of the road width, the navigation prompt range corresponding to the road section, wherein the confidence level of the road width is the positioning precision of the one positioning result; and determine the navigation prompt time according to the adjusted navigation prompt range.

13. The terminal device according to claim 9, wherein the road section width determining module (12) is specifically configured to: determine at least two positions of the user according to at least two positioning results obtained when the user walks on the road section; determine, according to the route information of the road section, a center line of the road section on which the user is currently located; determine a perpendicular distance between each position of the at least two positions and the center line of the road section on which the user is currently located; perform weighted average on the determined perpendicular distances according to positioning precision of the at least two positioning results; and use a perpendicular distance obtained by performing weighted average as a half road width of the road section on which the user is currently located.

14. The terminal device according to claim 13, wherein the navigation prompt time determining module (13) is specifically configured to: adjust, according to the road width and a confidence level of the road width, the navigation prompt range corresponding to the road section, wherein the confidence level of the road width is determined according to a quantity of positioning times of the at least two positioning results, a variance of the perpendicular distances, and mean positioning precision; and determine the navigation prompt time according to the adjusted navigation prompt range.

15. The terminal device according to claim 12 or 14, wherein the navigation prompt time determining module (13) is specifically configured to, if the road width is greater than a preset width, expand the navigation prompt range; otherwise, narrow the navigation prompt range or use a default navigation prompt range; or the navigation prompt time determining module (13) is specifically configured to, if the road width is greater than a preset width and the confidence level is greater than a preset confidence level, expand the navigation prompt range; otherwise, narrow the navigation prompt range or use a default navigation prompt range.

16. The terminal device according to any one of claims 9 to 15, wherein the road section determining module (11) is specifically configured to match latitude and longitude of the current position of the user with latitude and longitude of a starting point and latitude and longitude of an ending point of all road sections in the navigation planning route information, to determine the road section on which the user is currently located.

**Patentansprüche**

1. Fußgängernavigationsverarbeitungsverfahren, umfassend:

   Ermitteln (S101), durch ein Endgerät, in Übereinstimmung mit einer aktuellen Position eines Benutzers und mit Navigationsplanungsrouteninformationen, eines Straßenabschnitts, auf dem sich der Benutzer aktuell befindet, wobei die Navigationsplanungsrouteninformationen Routeninformationen aller Straßenabschnitte zwischen einem Startort und einem Ziel umfassen;
   Erhalten (S102), durch das Endgerät, einer Straßenbreite des Straßenabschnitts in Übereinstimmung mit einem Positionierungsergebnis, das erhalten wird, wenn der Benutzer auf dem Straßenabschnitt geht, und mit Routeninformationen des Straßenabschnitts;
   Ermitteln (S103), durch das Endgerät, in Übereinstimmung mit der Straßenbreite, einer Navigationsaufforderungszeit, die dem Straßenabschnitt entspricht, wobei die Navigationsaufforderungszeit eine Abbiegeaufforderungszeit ist; und
   Durchführen, durch das Endgerät, einer Navigationsaufforderung an den Benutzer in Übereinstimmung mit der Navigationsaufforderungszeit;
   wobei der Schritt zum Ermitteln, durch das Endgerät, in Übereinstimmung mit der Straßenbreite, einer Navigationsaufforderungszeit, die dem Straßenabschnitt entspricht, umfasst:

   Anpassen, durch das Endgerät, eines Navigationsaufforderungsbereichs in Übereinstimmung mit der Straßenbreite, wobei, wenn sich die Straßenbreite vergrößert, sich der Navigationsaufforderungsbereich ebenfalls vergrößert, und wenn sich die Straßenbreite verringert, sich der Navigationsaufforderungsbereich ebenfalls verringert, und
   wobei der Navigationsaufforderungsbereich ein Gebietsbereich ist, der einen Verbindungspunkt des Straßenabschnitts und eines nächsten Straßenabschnitts als einen Mittelpunkt verwendet; und

   Ermitteln, durch das Endgerät, einer Navigationsaufforderungszeit in Übereinstimmung mit dem angepassten Navigationsaufforderungsbereich, wobei die Navigationsaufforderungszeit ein Augenblick ist, zu dem der Benutzer in den Navigationsaufforderungsbereich tritt.

2. Verfahren nach Anspruch 1, wobei der Schritt zum Erhalten, durch das Endgerät, einer Straßenbreite des Straßenabschnitts in Übereinstimmung mit einem Positionierungsergebnis, das erhalten wird, wenn der Benutzer auf dem Straßenabschnitt geht, und mit Routeninformationen des Straßenabschnitts, umfasst:

   Senden, durch das Endgerät, an eine Vorrichtung auf Netzwerkseite, des Positionierungsergebnisses, das erhalten wird, wenn der Benutzer auf dem Straßenabschnitt geht, und der Routeninformationen des Straßenabschnitts, um von der Vorrichtung auf Netzwerkseite anzufordern, dass diese die Straßenbreite des Straßenabschnitts in Übereinstimmung mit dem Positionierungsergebnis und den Routeninformationen des Straßenabschnitts erhält; und
   Empfangen, durch das Endgerät, der von der Vorrichtung auf Netzwerkseite gesendeten Straßenbreite des Straßenabschnitts.

3. Verfahren nach Anspruch 1, wobei der Schritt zum Erhalten, durch das Endgerät, einer Straßenbreite des Straßenabschnitts in Übereinstimmung mit einem Positionierungsergebnis, das erhalten wird, wenn der Benutzer auf dem Straßenabschnitt geht, und mit Routeninformationen des Straßenabschnitts, umfasst:

   Ermitteln, durch das Endgerät, einer aktuellen Position des Benutzers in Übereinstimmung mit einem Positionierungsergebnis, das erhalten wird, wenn der Benutzer auf dem Straßenabschnitt geht;
   Ermitteln, durch das Endgerät in Übereinstimmung mit den Routeninformationen des Straßenabschnitts, einer Mittellinie des Straßenabschnitts, auf dem sich der Benutzer aktuell befindet;
   Ermitteln, durch das Endgerät, einer senkrechten Distanz zwischen der aktuellen Position des Benutzers und der Mittellinie des Straßenabschnitts, auf dem sich der Benutzer aktuell befindet; und

Verwenden, durch das Endgerät, der senkrechten Distanz als eine halbe Straßenbreite des Straßenabschnitts, auf dem sich der Benutzer aktuell befindet.

4. Verfahren nach Anspruch 3, wobei der Schritt zum Ermitteln, durch das Endgerät in Übereinstimmung mit der Straßenbreite, einer Navigationsaufforderungszeit, die dem Straßenabschnitt entspricht, umfasst:

Anpassen, in Übereinstimmung mit der Straßenbreite und einem Konfidenzniveau der Straßenbreite, des Navigationsaufforderungsbereichs, der dem Straßenabschnitt entspricht, wobei das Konfidenzniveau der Straßenbreite die Positionierungsgenauigkeit des einen Positionierungsergebnisses ist; und
Ermitteln, durch das Endgerät, der Navigationsaufforderungszeit in Übereinstimmung mit dem angepassten Navigationsaufforderungsbereich.

5. Verfahren nach Anspruch 1, wobei der Schritt zum Erhalten, durch das Endgerät, einer Straßenbreite des Straßenabschnitts in Übereinstimmung mit einem Positionierungsergebnis, das erhalten wird, wenn der Benutzer auf dem Straßenabschnitt geht, und mit Routeninformationen des Straßenabschnitts, umfasst:

Ermitteln, durch das Endgerät, von mindestens zwei Positionen des Benutzers in Übereinstimmung mit mindestens zwei Positionierungsergebnissen, die erhalten werden, wenn der Benutzer auf dem Straßenabschnitt geht;
Ermitteln, durch das Endgerät in Übereinstimmung mit den Routeninformationen des Straßenabschnitts, einer Mittellinie des Straßenabschnitts, auf dem sich der Benutzer aktuell befindet;
Ermitteln, durch das Endgerät, einer senkrechten Distanz zwischen jeder aktuellen Position der mindestens zwei Positionen und der Mittellinie des Straßenabschnitts, auf dem sich der Benutzer aktuell befindet;
Durchführen, durch das Endgerät, einer gewichteten Mittelung an den ermittelten senkrechten Distanzen in Übereinstimmung mit der Positionierungsgenauigkeit der mindestens zwei Positionierungsergebnisse; und
Verwenden, durch das Endgerät, einer durch Durchführen der gewichteten Mittelung erhaltenen senkrechten Distanz als eine halbe Straßenbreite des Straßenabschnitts, auf dem sich der Benutzer aktuell befindet.

6. Verfahren nach Anspruch 5, wobei der Schritt zum Ermitteln, durch das Endgerät in Übereinstimmung mit der Straßenbreite, einer Navigationsaufforderungszeit, die dem Straßenabschnitt entspricht, umfasst:

Anpassen, in Übereinstimmung mit der Straßenbreite und einem Konfidenzniveau der Straßenbreite, des Navigationsaufforderungsbereichs, der dem Straßenabschnitt entspricht, wobei das Konfidenzniveau der Straßenbreite in Übereinstimmung mit einer Anzahl von Positionierungszeiten der mindestens zwei Positionierungsergebnisse, einer Varianz der senkrechten Distanzen und einer mittleren Positionierungsgenauigkeit ermittelt wird; und
Ermitteln, durch das Endgerät, der Navigationsaufforderungszeit in Übereinstimmung mit dem angepassten Navigationsaufforderungsbereich.

7. Verfahren nach Anspruch 4 oder 6, wobei
der Schritt zum Anpassen, durch das Endgerät, in Übereinstimmung mit der Straßenbreite, eines Navigationsaufforderungsbereichs, der dem Straßenabschnitt entspricht, umfasst:

falls die Straßenbreite größer als eine voreingestellte Breite ist, Erweitern, durch das Endgerät, des Navigationsaufforderungsbereichs; andernfalls Verengen des Navigationsaufforderungsbereichs oder Verwenden eines Standard-Navigationsaufforderungsbereichs; und
der Schritt zum Anpassen, durch das Endgerät, in Übereinstimmung mit der Straßenbreite und einem Konfidenzniveau der Straßenbreite, eines Navigationsaufforderungsbereichs, der dem Straßenabschnitt entspricht, umfasst:

falls die Straßenbreite größer als eine voreingestellte Breite ist und das Konfidenzniveau größer als ein voreingestelltes Konfidenzniveau ist, Erweitern, durch das Endgerät, des Navigationsaufforderungsbereichs;
andernfalls Verengen des Navigationsaufforderungsbereichs oder Verwenden eines Standard-Navigationsaufforderungsbereichs.

8. Verfahren nach einem der Ansprüche 1 bis 7, wobei der Schritt zum Ermitteln, durch das Endgerät in Übereinstimmung mit einer aktuellen Position eines Benutzers und mit Navigationsplanungsrouteninformationen, eines Straßenabschnitts, auf dem sich der Benutzer aktuell befindet, umfasst:

Übereinstimmen, durch das Endgerät, von Breiten- und Längengrad der aktuellen Position des Benutzers mit Breiten- und Längengrad eines Ausgangspunkts und Breiten- und Längengrad eines Endpunkts aller Straßenabschnitte in den Navigationsplanungsrouteninformationen, um den Straßenabschnitt zu ermitteln, auf dem sich der Benutzer aktuell befindet.

9. Endgerät, umfassend:

ein Straßenabschnittermittlungsmodul (11), das ausgelegt ist, in Übereinstimmung mit einer aktuellen Position eines Benutzers und mit Navigationsplanungsrouteninformationen einen Straßenabschnitt zu ermitteln, auf dem sich der Benutzer aktuell befindet, wobei die Navigationsplanungsrouteninformationen Routeninformationen aller Straßenabschnitte zwischen einem Startort und einem Ziel umfassen;

ein Straßenabschnittbreitenermittlungsmodul (12), das ausgelegt ist, eine Straßenbreite des Straßenabschnitts in Übereinstimmung mit einem Positionierungsergebnis, das erhalten wird, wenn der Benutzer auf dem Straßenabschnitt geht, und mit Routeninformationen des Straßenabschnitts zu erhalten und die Straßenbreite des Straßenabschnitts an ein Navigationsaufforderungszeitermittlungsmodul (13) zu senden;

das Navigationsaufforderungszeitermittlungsmodul (13), das ausgelegt ist, die vom Straßenabschnittbreitenermittlungsmodul (12) gesendete Straßenbreite des Straßenabschnitts zu empfangen, in Übereinstimmung mit der Straßenbreite eine Navigationsaufforderungszeit zu ermitteln, die dem Straßenabschnitt entspricht, und die Navigationsaufforderungszeit an ein Navigationsaufforderungsmodul (14) zu senden, wobei die Navigationsaufforderungszeit eine Abbiegeaufforderungszeit ist; und

das Navigationsaufforderungsmodul (14), das ausgelegt ist, die vom Navigationsaufforderungszeitermittlungsmodul (13) gesendete Navigationsaufforderungszeit zu empfangen und eine Navigationsaufforderung an den Benutzer in Übereinstimmung mit der Navigationsaufforderungszeit durchzuführen, wobei

das Navigationsaufforderungszeitermittlungsmodul ausgelegt ist: in Übereinstimmung mit der Straßenbreite einen Navigationsaufforderungsbereich anzupassen, der dem Straßenabschnitt entspricht,

wobei, wenn sich die Straßenbreite vergrößert, sich der Navigationsaufforderungsbereich ebenfalls vergrößert, und wenn sich die Straßenbreite verringert, sich der Navigationsaufforderungsbereich ebenfalls verringert, und wobei der Navigationsaufforderungsbereich ein Gebietsbereich ist, der einen Verbindungspunkt des Straßenabschnitts und eines nächsten Straßenabschnitts als einen Mittelpunkt verwendet; und

die Navigationsaufforderungszeit in Übereinstimmung mit dem angepassten Navigationsaufforderungsbereich zu ermitteln, wobei die Navigationsaufforderungszeit ein Augenblick ist, zu dem der Benutzer in den Navigationsaufforderungsbereich tritt.

10. Endgerät nach Anspruch 9, wobei das Straßenabschnittermittlungsmodul (12) insbesondere ausgelegt ist: das Positionierungsergebnis, das erhalten wird, wenn der Benutzer auf dem Straßenabschnitt geht, und die Routeninformationen des Straßenabschnitts an eine Vorrichtung auf Netzwerkseite zu senden, um von der Vorrichtung auf Netzwerkseite anzufordern, dass diese die Straßenbreite des Straßenabschnitts in Übereinstimmung mit dem Positionierungsergebnis und den Routeninformationen des Straßenabschnitts erhält; die von der Vorrichtung auf Netzwerkseite gesendete Straßenbreite des Straßenabschnitts zu empfangen.

11. Endgerät nach Anspruch 9, wobei das Straßenabschnittbreitenermittlungsmodul (12) insbesondere ausgelegt ist: eine aktuelle Position des Benutzers in Übereinstimmung mit einem Positionierungsergebnis zu ermitteln, das erhalten wird, wenn der Benutzer auf dem Straßenabschnitt geht; in Übereinstimmung mit den Routeninformationen des Straßenabschnitts eine Mittellinie des Straßenabschnitts zu ermitteln, auf dem sich der Benutzer aktuell befindet; eine senkrechte Distanz zwischen der aktuellen Position des Benutzers und der Mittellinie des Straßenabschnitts zu ermitteln, auf dem sich der Benutzer aktuell befindet; und die senkrechte Distanz als eine halbe Straßenbreite des Straßenabschnitts zu verwenden, auf dem sich der Benutzer aktuell befindet.

12. Endgerät nach Anspruch 11, wobei das Navigationsaufforderungszeitermittlungsmodul (13) insbesondere ausgelegt ist: in Übereinstimmung mit der Straßenbreite und einem Konfidenzniveau der Straßenbreite den Navigationsaufforderungsbereich anzupassen, der dem Straßenabschnitt entspricht, wobei das Konfidenzniveau der Straßenbreite die Positionierungsgenauigkeit des einen Positionierungsergebnisses ist; und die Navigationsaufforderungszeit in Übereinstimmung mit dem angepassten Navigationsaufforderungsbereich zu ermitteln.

13. Endgerät nach Anspruch 9, wobei das Straßenabschnittbreitenermittlungsmodul (12) insbesondere ausgelegt ist: mindestens zwei Positionen des Benutzers in Übereinstimmung mit mindestens zwei Positionierungsergebnissen zu ermitteln, die erhalten werden, wenn der Benutzer auf dem Straßenabschnitt geht; in Übereinstimmung mit den Routeninformationen des Straßenabschnitts eine Mittellinie des Straßenabschnitts zu ermitteln, auf dem sich der Benutzer aktuell befindet; eine senkrechte Distanz zwischen jeder aktuellen Position der mindestens zwei Positionen und der Mittellinie des Straßenabschnitts zu ermitteln, auf dem sich der Benutzer aktuell befindet; eine gewichtete Mittelung an den ermittelten senkrechten Distanzen in Übereinstimmung mit der Positionierungsgenauigkeit der mindestens zwei Positionierungsergebnisse durchzuführen; und eine durch Durchführen der gewichteten Mittelung erhaltene senkrechte Distanz als eine halbe Straßenbreite des Straßenabschnitts zu verwenden, auf dem sich der Benutzer aktuell befindet.

14. Endgerät nach Anspruch 13, wobei das Navigationsaufforderungszeitermittlungsmodul (13) insbesondere ausgelegt ist: in Übereinstimmung mit der Straßenbreite und einem Konfidenzniveau der Straßenbreite den Navigationsaufforderungsbereich anzupassen, der dem Straßenabschnitt entspricht, wobei das Konfidenzniveau der Straßenbreite in Übereinstimmung mit einer Anzahl von Positionierungszeiten der mindestens zwei Positionierungsergebnisse, einer Varianz der senkrechten Distanzen und einer mittleren Positionierungsgenauigkeit ermittelt wird; und die Navigationsaufforderungszeit in Übereinstimmung mit dem angepassten Navigationsaufforderungsbereich zu ermitteln.

15. Endgerät nach Anspruch 12 oder 14, wobei das Navigationsaufforderungszeitermittlungsmodul (13) insbesondere ausgelegt ist, falls die Straßenbreite größer als eine voreingestellte Breite ist, den Navigationsaufforderungsbereich zu erweitern; andernfalls den Navigationsaufforderungsbereich zu verengen oder einen Standard-Navigationsaufforderungsbereich zu verwenden; oder das Navigationsaufforderungszeitermittlungsmodul (13) insbesondere ausgelegt ist, falls die Straßenbreite größer als eine voreingestellte Breite ist und das Konfidenzniveau über einem voreingestellten Konfidenzniveau liegt, den Navigationsaufforderungsbereich zu erweitern; andernfalls den Navigationsaufforderungsbereich zu verengen oder einen Standard-Navigationsaufforderungsbereich zu verwenden.

16. Endgerät nach einem der Ansprüche 9 bis 15, wobei das Straßenabschnittermittlungsmodul (11) insbesondere ausgelegt ist, Breiten- und Längengrad der aktuellen Position des Benutzers mit Breiten- und Längengrad eines Ausgangspunkts und Breiten- und Längengrad eines Endpunkts aller Straßenabschnitte in den Navigationsplanungsrouteninformationen übereinzustimmen, um den Straßenabschnitt zu ermitteln, auf dem sich der Benutzer aktuell befindet.

**Revendications**

1. Procédé de traitement de navigation piétonne, comprenant de :

déterminer (S101), par un dispositif terminal, en fonction d'une position actuelle d'un utilisateur et d'informations d'itinéraire de planification de navigation, une section de route sur laquelle l'utilisateur est actuellement situé, dans lequel les informations d'itinéraire de planification de navigation comprennent des informations d'itinéraire de toutes les sections de route entre un lieu de départ et une destination ;
obtenir (S102), par le dispositif terminal, une largeur de route de la section de route en fonction d'un résultat de positionnement obtenu lorsque l'utilisateur marche sur la section de route et d'informations d'itinéraire de la section de route ;
déterminer (S103), par le dispositif terminal, en fonction de la largeur de route, un temps d'invite de navigation correspondant à la section de route, dans lequel le temps d'invite de navigation est un temps d'invite pour tourner ; et
effectuer, par le dispositif terminal, une invite de navigation pour l'utilisateur en fonction du temps d'invite de navigation ;
dans lequel l'étape de détermination, par le dispositif terminal, en fonction de la largeur de route, d'un temps d'invite de navigation correspondant à la section de route comprend de :

ajuster, par le dispositif terminal, une plage d'invite de navigation en fonction de la largeur de route, dans lequel, lorsque la largeur de route augmente, la plage d'invite de navigation augmente également, et lorsque la largeur de route diminue, la plage d'invite de navigation diminue également, et
dans lequel la plage d'invite de navigation est une plage de région utilisant un point de connexion de la section de route et d'une section de route suivante en tant que centre ; et

déterminer, par le dispositif terminal, un temps d'invite de navigation en fonction de la plage d'invite de navigation ajustée, dans lequel le temps d'invite de navigation est un moment où l'utilisateur rentre dans la plage d'invite de navigation.

2. Procédé selon la revendication 1, dans lequel l'étape d'obtention, par le dispositif terminal, d'une largeur de route de la section de route en fonction d'un résultat de positionnement obtenu lorsque l'utilisateur marche sur la section de route et d'informations d'itinéraire de la section de route comprend de :

   envoyer, par le dispositif terminal, à un dispositif côté réseau, le résultat de positionnement obtenu lorsque l'utilisateur marche sur la section de route et les informations d'itinéraire de la section de route, pour demander au dispositif côté réseau d'obtenir la largeur de route de la section de route en fonction du résultat de positionnement et des informations d'itinéraire de la section de route ; et
   recevoir, par le dispositif terminal, la largeur de route de la section de route envoyée par le dispositif côté réseau.

3. Procédé selon la revendication 1, dans lequel l'étape d'obtention, par le dispositif terminal, d'une largeur de route de la section de route en fonction d'un résultat de positionnement obtenu lorsque l'utilisateur marche sur la section de route et d'informations d'itinéraire de la section de route comprend de :

   déterminer, par le dispositif terminal, une position actuelle de l'utilisateur en fonction d'un résultat de positionnement obtenu lorsque l'utilisateur marche sur la section de route ;
   déterminer, par le dispositif terminal en fonction des informations d'itinéraire de la section de route, une ligne médiane de la section de route sur laquelle l'utilisateur se trouve actuellement ;
   déterminer, par le dispositif terminal, une distance perpendiculaire entre la position actuelle de l'utilisateur et la ligne médiane de la section de route sur laquelle l'utilisateur se trouve actuellement ; et
   utiliser, par le dispositif terminal, la distance perpendiculaire comme une demi-largeur de route de la section de route sur laquelle l'utilisateur se trouve actuellement.

4. Procédé selon la revendication 3, dans lequel l'étape de détermination, par le dispositif terminal, en fonction de la largeur de route, d'un temps d'invite de navigation correspondant à la section de route comprend de :

   ajuster, en fonction de la largeur de route et d'un niveau de confiance de la largeur de route, la plage d'invite de navigation correspondant à la section de route, dans lequel le niveau de confiance de la largeur de route est la précision de positionnement du résultat de positionnement donné ; et
   déterminer, par le dispositif terminal, le temps d'invite de navigation en fonction de la plage d'invite de navigation ajustée.

5. Procédé selon la revendication 1, dans lequel l'étape d'obtention, par le dispositif terminal, d'une largeur de route de la section de route en fonction d'un résultat de positionnement obtenu lorsque l'utilisateur marche sur la section de route et d'informations d'itinéraire de la section de route comprend de :

   déterminer, par le dispositif terminal, au moins deux positions de l'utilisateur en fonction d'au moins deux résultats de positionnement obtenus lorsque l'utilisateur marche sur la section de route ;
   déterminer, par le dispositif terminal en fonction des informations d'itinéraire de la section de route, une ligne médiane de la section de route sur laquelle l'utilisateur se trouve actuellement ;
   déterminer, par le dispositif terminal, une distance perpendiculaire entre chaque position des au moins deux positions et la ligne médiane de la section de route sur laquelle l'utilisateur se trouve actuellement ;
   effectuer, par le dispositif terminal, une moyenne pondérée sur les distances perpendiculaires déterminées en fonction de la précision de positionnement des au moins deux résultats de positionnement ; et
   utiliser, par le dispositif terminal, une distance perpendiculaire obtenue en effectuant une moyenne pondérée comme une demi-largeur de route de la section de route sur laquelle l'utilisateur se trouve actuellement.

6. Procédé selon la revendication 5, dans lequel l'étape de détermination, par le dispositif terminal, en fonction de la largeur de route, d'un temps d'invite de navigation correspondant à la section de route comprend de :

   ajuster, en fonction de la largeur de route et d'un niveau de confiance de la largeur de route, la plage d'invite de navigation correspondant à la section de route, dans lequel le niveau de confiance de la largeur de route est déterminé en fonction d'une quantité de temps de positionnement des au moins deux résultats de positionnement, d'une variance des distances perpendiculaires, et d'une précision de positionnement moyenne ; et
   déterminer, par le dispositif terminal, le temps d'invite de navigation en fonction de la plage d'invite de navigation ajustée.

**7.** Procédé selon la revendication 4 ou 6, dans lequel l'étape d'ajustement, par le dispositif terminal, en fonction de la largeur de route, d'une plage d'invite de navigation correspondant à la section de route comprend de :

si la largeur de route est supérieure à une largeur prédéfinie, élargir, par le dispositif terminal, la plage d'invite de navigation ; sinon, réduire la plage d'invite de navigation ou utiliser une plage d'invite de navigation par défaut ; et

l'étape d'ajustement, par le dispositif terminal en fonction de la largeur de route et d'un niveau de confiance de la largeur de route, d'une plage d'invite de navigation correspondant à la section de route comprend de :

si la largeur de route est supérieure à une largeur prédéfinie et que le niveau de confiance est supérieur à un niveau de confiance prédéfini, élargir, par le dispositif terminal, la plage d'invite de navigation ; sinon, réduire la plage d'invite de navigation ou utiliser une plage d'invite de navigation par défaut.

**8.** Procédé selon l'une quelconque des revendications 1 à 7, dans lequel l'étape de détermination, par le dispositif terminal en fonction d'une position actuelle d'un utilisateur et d'informations d'itinéraire de planification de navigation, d'une section de route sur laquelle l'utilisateur se trouve actuellement comprend de :

faire correspondre, par le dispositif terminal, la latitude et la longitude de la position actuelle de l'utilisateur avec la latitude et la longitude d'un point de départ et la latitude et la longitude d'un point d'arrivée de toutes les sections de route dans les informations d'itinéraire de planification de navigation, pour déterminer la section de route sur laquelle l'utilisateur se trouve actuellement.

**9.** Dispositif terminal comprenant :

un module de détermination de section de route (11), configuré pour déterminer, en fonction d'une position actuelle d'un utilisateur et d'informations d'itinéraire de planification de navigation, une section de route sur laquelle l'utilisateur se trouve actuellement, dans lequel les informations d'itinéraire de planification de navigation comprennent des informations d'itinéraire de toutes les sections de route entre un lieu de départ et une destination ;

un module de détermination de largeur de section de route (12), configuré pour obtenir une largeur de route de la section de route en fonction d'un résultat de positionnement obtenu lorsque l'utilisateur marche sur la section de route et d'informations d'itinéraire de la section de route, et envoyer la largeur de route de la section de route à un module de détermination de temps d'invite de navigation (13) ;

le module de détermination de temps d'invite de navigation (13), configuré pour recevoir la largeur de route de la section de route envoyée par le module de détermination de largeur de section de route (12), déterminer, en fonction de la largeur de route, un temps d'invite de navigation correspondant à la section de route, et envoyer le temps d'invite de navigation à un module d'invite de navigation (14), dans lequel le temps d'invite de navigation est un temps d'invite pour tourner ; et

le module d'invite de navigation (14), configuré pour recevoir le temps d'invite de navigation envoyé par le module de détermination de temps d'invite de navigation (13), et effectuer une invite de navigation pour l'utilisateur en fonction du temps d'invite de navigation, dans lequel le module de détermination de temps d'invite de navigation est configuré pour : ajuster, en fonction de la largeur de route, une plage d'invite de navigation correspondant à la section de route, dans lequel, lorsque la largeur de route augmente, la plage d'invite de navigation augmente également, et lorsque la largeur de route diminue, la plage d'invite de navigation diminue également, et dans lequel la plage d'invite de navigation est une plage de région utilisant un point de connexion de la section de route et d'une section de route suivante en tant que centre ; et

déterminer le temps d'invite de navigation en fonction de la plage d'invite de navigation ajustée, dans lequel le temps d'invite de navigation est un moment où l'utilisateur rentre dans la plage d'invite de navigation.

**10.** Dispositif terminal selon la revendication 9, dans lequel le module de détermination de largeur de section de route (12) est spécifiquement configuré pour : envoyer à un dispositif côté réseau, le résultat de positionnement obtenu lorsque l'utilisateur marche sur la section de route et les informations d'itinéraire de la section de route, pour demander au dispositif côté réseau d'obtenir la largeur de route de la section de route en fonction du résultat de positionnement et des informations d'itinéraire de la section de route ; et recevoir la largeur de route de la section de route envoyée par le dispositif côté réseau.

**11.** Dispositif terminal selon la revendication 9, dans lequel le module de détermination de largeur de section de route (12) est spécifiquement configuré pour : déterminer une position actuelle de l'utilisateur en fonction d'un résultat de positionnement obtenu lorsque l'utilisateur marche sur la section de route ; déterminer, en fonction des informations d'itinéraire de la section de route, une ligne médiane de la section de route sur laquelle l'utilisateur se trouve actuellement ; déterminer une distance perpendiculaire entre la position actuelle de l'utilisateur et la ligne médiane de la section de route sur laquelle l'utilisateur se trouve actuellement ; et utiliser la distance perpendiculaire comme une demi-largeur de route de la section de route sur laquelle l'utilisateur se trouve actuellement.

12. Dispositif terminal selon la revendication 11, dans lequel le module de détermination de temps d'invite de navigation (13) est spécifiquement configuré pour : ajuster, en fonction de la largeur de route et d'un niveau de confiance de la largeur de route, la plage d'invite de navigation correspondant à la section de route, dans lequel le niveau de confiance de la largeur de route est la précision de positionnement du résultat de positionnement ; et déterminer le temps d'invite de navigation en fonction de la plage d'invite de navigation ajustée.

13. Dispositif terminal selon la revendication 9, dans lequel le module de détermination de largeur de section de route (12) est spécifiquement configuré pour : déterminer au moins deux positions de l'utilisateur en fonction d'au moins deux résultats de positionnement obtenus lorsque l'utilisateur marche sur la section de route ; déterminer, en fonction des informations d'itinéraire de la section de route, une ligne médiane de la section de route sur laquelle l'utilisateur se trouve actuellement ; déterminer une distance perpendiculaire entre chaque position des au moins deux positions et la ligne médiane de la section de route sur laquelle l'utilisateur se trouve actuellement ; effectuer une moyenne pondérée sur les distances perpendiculaires déterminées en fonction de la précision de positionnement des au moins deux résultats de positionnement ; et utiliser une distance perpendiculaire obtenue en effectuant une moyenne pondérée comme une demi-largeur de route de la section de route sur laquelle l'utilisateur se trouve actuellement.

14. Dispositif terminal selon la revendication 13, dans lequel le module de détermination du temps d'invite de navigation (13) est spécifiquement configuré pour : ajuster, en fonction de la largeur de route et d'un niveau de confiance de la largeur de route, la plage d'invite de navigation correspondant à la section de route, dans lequel le niveau de confiance de la largeur de route est déterminé en fonction d'une quantité de temps de positionnement des au moins deux résultats de positionnement, d'une variance des distances perpendiculaires, et d'une précision de positionnement moyenne ; et déterminer le temps d'invite de navigation en fonction de la plage d'invite de navigation ajustée.

15. Dispositif terminal selon la revendication 12 ou 14, dans lequel le module de détermination de temps d'invite de navigation (13) est spécifiquement configuré pour, si la largeur de route est supérieure à une largeur prédéfinie, élargir la plage d'invite de navigation ; sinon, réduire la plage d'invite de navigation ou utiliser une plage d'invite de navigation par défaut ; ou le module de détermination de temps d'invite de navigation (13) est spécifiquement configuré pour, si la largeur de route est supérieure à une largeur prédéfinie et que le niveau de confiance est supérieur à un niveau de confiance prédéfini, élargir la plage d'invite de navigation ; sinon, réduire la plage d'invite de navigation ou utiliser une plage d'invite de navigation par défaut.

16. Dispositif terminal selon l'une quelconque des revendications 9 à 15, dans lequel le module de détermination de section de route (11) est spécifiquement configuré pour faire correspondre la latitude et la longitude de la position actuelle de l'utilisateur avec la latitude et la longitude d'un point de départ et la latitude et la longitude d'un point d'arrivée de toutes les sections de route dans les informations d'itinéraire de planification de navigation, pour déterminer la section de route sur laquelle l'utilisateur se trouve actuellement.

Determine, according to a current position of a user and navigation planning route information, a road section on which the user is currently located, where the navigation planning route information includes route information of all road sections between a departure place and a destination

S 101

Obtaining a road width of the road section according to a positioning result obtained when the user walks on the road section and route information of the road section

S 102

Determine, according to the road width, a navigation prompt time corresponding to the road section

S 103

Perform navigation prompting for the user according to the navigation prompt time

S 104

FIG. 1

Obtain navigation planning route information according to a departure place and a destination — S201

Obtain a set of route nodes according to the navigation planning route information — S202

Determine a set of road sections according to the set of route nodes — S203

Obtain a current position of a user, and determine, according to the current position of the user and the set of road sections, a road section on which the user is currently located — S204

Determine a road width of the road section on which the user is currently located and a confidence level of the road width — S205

Dynamically adjust a navigation prompt range according to the road width, determine a navigation prompt time according to the navigation prompt range, and perform navigation for the user according to the navigation prompt time — S206

FIG. 2

FIG. 3

P 3

P 2

Destination

Departure
place

P 0

P 1

FIG. 4

FIG. 5

```
┌─────────────────────────────────────┐
│  ┌─────────────────────────┐         │
│  │ Road section determining │ ⌒ 11   │
│  │        module            │        │
│  └─────────────────────────┘  ⌒ 100  │
│            │                          │
│  ┌─────────────────────────┐         │
│  │   Road section width     │ ⌒ 12   │
│  │   determining module     │        │
│  └─────────────────────────┘         │
│            │                          │
│  ┌─────────────────────────┐         │
│  │ Navigation prompt time   │ ⌒ 13   │
│  │   determining module     │        │
│  └─────────────────────────┘         │
│            │                          │
│  ┌─────────────────────────┐         │
│  │   Navigation prompt      │ ⌒ 14   │
│  │        module            │        │
│  └─────────────────────────┘         │
└─────────────────────────────────────┘
```

FIG. 6

FIG. 7

FIG. 8

FIG. 9

**EP 2 950 047 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6278943 B1
- JP 2004045156 A
- US 20130013197 A1